# EUROPEAN PATENT APPLICATION

(11) **EP 4 528 527 A1**
(43) Date of publication of application: **26.03.2025**
(21) Application number: 23870400.1
(22) Date of filing: 15.09.2023
(51) Int. Cl.: G06F 16/176

(54) **METHOD FOR SHARING FILE, AND ELECTRONIC DEVICE AND COMPUTER-READABLE STORAGE MEDIUM**

(30) Priority: 26.09.2022 CN 202211176908
(71) Applicant: Huawei Technologies Co., Ltd., Shenzhen, Guangdong 518129 (CN)
(72) Inventor: MAO, Jingjing, Shenzhen, Guangdong 518129 (CN); WANG, Ke, Shenzhen, Guangdong 518129 (CN); YI, Jian, Shenzhen, Guangdong 518129 (CN); NING, Zuobin, Shenzhen, Guangdong 518129 (CN); QIAN, Jiaxing, Shenzhen, Guangdong 518129 (CN)
(74) Representative: Thun, Clemens
(86) International application number: PCT/CN2023/119132
(87) International publication number: WO 2024/067166

(57) **Abstract**

This application relates to the field of intelligent terminal technologies, and in particular, to a file sharing method, an electronic device, and a computer-readable storage medium. The method includes: In response to that a first electronic device detects a first sharing operation of a user for indicating to share a first file with a second electronic device, the second electronic device displays the first file; and in response to that the first electronic device detects that the first file meets a first condition for ending sharing, the second electronic device stops displaying the first file. The first condition includes that sharing permission information corresponding to the second electronic device fails to be matched, or that matched sharing permission information corresponding to the second electronic device is invalid. In the solution of this application, in a file sharing process, security management and control can be performed on sharing permission information for opening or obtaining a target file by a target device, to ensure that the target file can be accessed or obtained only by a specified target device within a validity period, to help improve security of the target file in the sharing process.

## Description

This application claims priority to Chinese Patent Application No. 202211176908.9, filed with the China National Intellectual Property Administration on September 26, 2022, and entitled "FILE SHARING METHOD, ELECTRONIC DEVICE, AND COMPUTER-READABLE STORAGE MEDIUM", which is incorporated herein by reference in its entirety.

### TECHNICAL FIELD

The present invention relates to the field of intelligent terminal technologies, and in particular, to a file sharing method, an electronic device, and a computer-readable storage medium.

### BACKGROUND

With development of intelligent terminal technologies, a same user has increasingly more types of terminal devices, and there are increasingly more scenarios in which the user performs handoff and collaborative operation between different terminal devices. For example, the user may play a video, received on a mobile phone, on a television, or process a document, received on a mobile phone, on a computer.

Therefore, a plurality of intelligent terminals may form a hyper terminal by using technologies such as a distributed technology. It is increasingly expected by the user that experience of cross-device file opening or data, for example, file and text, copying and pasting is the same as that of a local operation. It is increasingly expected by a developer who is dedicated to terminal device research and development that an interface for cross-device file sharing can be normalized with a local interface, and no special adaptation is required for different cross-device scenarios.

However, in a current cross-device file sharing solution, a lack of security management and control on a target file that is being shared leads to a great threat on security of the target file in a sharing process.

### SUMMARY

In view of this, embodiments of this application provide a file sharing method, an electronic device, and a computer-readable storage medium, to improve security of a corresponding shared target file in a file sharing process. Specifically, the following aspects are included.

According to a first aspect, an embodiment of this application provides a file sharing method, where the method includes: In response to that a first electronic device detects a first sharing operation of a user for indicating to share a first file with a second electronic device, the second electronic device displays the first file; and in response to that the first electronic device detects that the first file meets a first condition for ending sharing, the second electronic device stops displaying the first file. The first condition includes that sharing permission information corresponding to the second electronic device fails to be matched, or that matched sharing permission information corresponding to the second electronic device is invalid.

In other words, the first electronic device may ensure, based on the preset first condition used to control ending of sharing, security of a shared target file in a sharing process. For example, the first electronic device may be a mobile phone and serve as a local device; and the second electronic device may be a computer and serve as a target device. The first file is, for example, a target file like a picture or a document locally stored in the mobile phone, and the first sharing operation is an operation of the user for indicating to open the target file like the picture or the document on the mobile phone by using the computer. Based on the solution provided in the first aspect, if the mobile phone detects that the target file like the picture or the document that is specified by the user and that is to be shared with the computer meets the first condition for ending sharing, for example, when the mobile phone fails to match authorization information (that is, the foregoing sharing permission information) that authorizes the second electronic device to open the corresponding target file, or when the mobile phone matches sharing permission information corresponding to the second electronic device but the information is invalid, the computer cannot display the corresponding target file shared by the mobile phone.

In this way, the target file like the picture or the document shared by the first electronic device (for example, the mobile phone) can be displayed only by the specified second electronic device (for example, the computer) within a validity period of the sharing permission information or the authorization information, and another electronic device or a second electronic device whose authorization information is invalid cannot display the corresponding target file. Therefore, security of the target file in the sharing process can be ensured.

In a possible implementation of the first aspect, that the sharing permission information corresponding to the second electronic device fails to be matched includes that sharing permission information of the first file for the second electronic device is not set in the first electronic device; and that matched sharing permission information corresponding to the second electronic device is invalid includes that sharing permission information that is set in the first electronic device and that is of the first file for the second electronic device is deleted.

For example, if the user does not specify the target file that the second electronic device is authorized to open on the first electronic device, the first electronic device does not set the authorization information, that is, the sharing permission information, of the first file (that is, the specified shared target file) for the second electronic device. In this case, the first electronic device fails to match the sharing permission information corresponding to the second electronic device.

For another example, although the user specifies the target file that the second electronic device is authorized to open on the first electronic device, if the user does not operate the second electronic device to browse the target file within long time, or the first electronic device or the second electronic device reconnects to a network after being disconnected from the network, the first electronic device and the second electronic device are also reconnected, and the authorization information that is of the first file (that is, the specified shared target file) and that is set in the first electronic device for the second electronic device is deleted. In this case, the first electronic device detects that the matched sharing permission information corresponding to the second electronic device is invalid.

In a possible implementation of the first aspect, that the first electronic device detects that the first file meets a first condition for ending sharing includes: The first electronic device fails to match first permission information corresponding to the second electronic device based on at least one piece of sharing permission information corresponding to the first file; or the first electronic device determines, based on a first management and control policy corresponding to the first file, that the first permission information is invalid. The method further includes:

In response to that the first electronic device detects an open operation of the user for opening the first file on the second electronic device, the second electronic device displays a prompt interface, where the prompt interface is used to prompt that the second electronic device does not have access permission for the first file.

In other words, the first electronic device may include sharing permission information of authorization performed by a plurality of shared target files for a plurality of electronic devices, and the first electronic device may perform security management and control on the corresponding sharing permission information by using a security management and control policy corresponding to each electronic device. For example, the first electronic device may determine, based on the first management and control policy that is correspondingly set for authorizing sharing of the first file with the second electronic device, whether the first permission information corresponding to the second electronic device is invalid. In addition, when the first electronic device determines, based on a security management and control policy, that corresponding permission information is invalid, for example, determines, based on the first management and control policy, that the first permission information is invalid, if the first electronic device detects that the second electronic device attempts to open the first file, in this case, the first electronic device no longer shares the target file (that is, the first file) with the second electronic device. Correspondingly, the second electronic device may display the prompt interface to remind the user that the second electronic device has no permission to access the target file on the first electronic device. In this way, the user may be notified in time of a case in which the authorization is invalid, so that the user may perform a related operation of file sharing again when the user needs to open the target file across devices.

In a possible implementation of the first aspect, the first management and control policy includes: a timeout invalidation policy, used to invalidate the first permission information when it is detected that the first permission information is unused for longer than preset invalidation duration; and/or a link disconnection invalidation policy, used to invalidate the first permission information when it is detected that a communication connection between the first electronic device and the second electronic device is disconnected.

In a possible implementation of the first aspect, that the first electronic device determines, based on a first management and control policy corresponding to the first file, that the first permission information is invalid includes: The first electronic device detects whether the first permission information is unused for longer than the preset invalidation duration, and deletes the first permission information based on the timeout invalidation policy; or the first electronic device detects that the communication connection to the second electronic device is disconnected, and deletes the first permission information based on the link disconnection invalidation policy.

For example, the preset invalidation duration corresponding to the timeout invalidation policy may be preset to, for example, 2 minutes, that is, a validity time threshold. Further, based on the timeout invalidation policy, it may be checked whether a time interval between a moment at which the target device (for example, the second electronic device) opens a distributed file this time and a recorded moment at which the target device closes the distributed file last time exceeds 2 minutes. If the time interval exceeds 2 minutes, it may be determined that the authorization information corresponding to the target device, for example, the first permission information, is invalid. For example, the authorization information may be invalid by deleting the authorization information. If the target device uses the corresponding authorization information to open the corresponding shared target file within the preset invalidation duration, it may also be determined, based on the timeout invalidation policy, that the authorization information corresponding to the target device is valid.

In a possible implementation of the first aspect, the first electronic device includes a distributed file system, and that a first electronic device detects a first sharing operation of a user for indicating to share a first file with a second electronic device includes: In response to the first sharing operation, the first electronic device creates a first mapping file corresponding to the first file in the distributed file system, where a first mapping relationship exists between the first file and the first mapping file; and the first electronic device sets the first permission information and the first management and control policy in the created first mapping file; and the first electronic device sends a first sharing request to the second electronic device, where the first sharing request includes a global identifier of the first mapping file, and the global identifier is a unique identifier of the first mapping file in the first electronic device.

When detecting the operation of the user for specifying the target file for sharing, the first electronic device, that is, the local device, may first create, in the distributed file system, a mapping file, for example, the foregoing first mapping file, that is correspondingly mapped to the target file and set a security management and control policy, for example, the foregoing first management and control policy, in the created first mapping file. Further, the first electronic device may send the global identifier corresponding to the first mapping file to the second electronic device, to implement sharing of content of the target file by sharing read/write permission of the first mapping file. In this way, in the sharing process of the shared target file, the second electronic device may directly access the first mapping file in the distributed file system by using a sharing capability of the distributed file system based on the corresponding authorization information, to read/write the target file. Therefore, sharing effect is good, and security of the target file may also be further improved.

In a possible implementation of the first aspect, the global identifier includes a uniform resource identifier URI of the first mapping file, and that the second electronic device displays the first file includes: In response to the first sharing request, the second electronic device opens the first file based on the URI of the first mapping file and the first mapping relationship; or in response to the first sharing request, the second electronic device obtains the first file based on the URI in the first sharing request and the first mapping relationship.

For example, in a cross-device file opening scenario, the first electronic device may share the URI of the first mapping file corresponding to the target file with a target device specified by the user. Further, the target device may open content of the first file in the first electronic device based on the URI of the first mapping file and a mapping relationship between the target file and the first mapping file.

For another example, in a cross-device copying and pasting scenario, in response to a copy operation of the user, the first electronic device may share the URI of the first mapping file corresponding to the target file with one or more currently connected electronic devices, including the foregoing second electronic device. Further, in response to the paste operation of the user, the second electronic device may obtain the first file on the first electronic device and store the first file into memory space of the second electronic device based on the first mapping file URI in the first sharing request.

In a possible implementation of the first aspect, the first sharing request further includes a first application identifier of a first application, and the first application is an application installed on the second electronic device. In addition, that the second electronic device displays the first file includes: In response to the first sharing request, the second electronic device opens the first file by using the first application based on the URI in the first sharing request, the first application identifier, and the first mapping relationship; and in response to the first sharing request, the second electronic device obtains and stores, based on the URI in the first sharing request, the first application identifier, and the first mapping relationship, the first file into memory space corresponding to the first application.

In a possible implementation of the first aspect, the first file and the first mapping file each include a file structure, a dentry structure, and an inode structure. The first mapping relationship includes: the file structure of the first file is correspondingly mapped to the file structure of the first mapping file, the dentry structure of the first file is correspondingly mapped to the dentry structure of the first mapping file, and the inode structure of the first file is correspondingly mapped to the inode structure of the first mapping file.

In a possible implementation of the first aspect, that the first electronic device sets the first permission information and the first management and control policy in the created first mapping file includes setting the first permission information and the first management and control policy in the dentry structure of the first mapping file.

In a possible implementation of the first aspect, the first sharing operation includes an open operation on the first file or a copy operation on the first file.

In a possible implementation of the first aspect, the prompt interface displays prompt information, to prompt that the second electronic device does not have access permission for the first file, where the prompt information includes content indicating that the first file does not exist.

In other words, if the first electronic device determines that the authorization information corresponding to the access to the first file by the second electronic device is invalid or does not exist, when the user operates the second electronic device to attempt to open or obtain the first file, the second electronic device may display the prompt interface to notify the user, for example, prompt the user that the target file (that is, the first file) does not exist.

According to a second aspect, an embodiment of this application provides a file sharing method, applied to a first electronic device. The method includes: detecting a first sharing operation of a user for indicating to share a first file with a second electronic device, and sending a first sharing request to the second electronic device, where the first sharing request indicates the second electronic device to display the first file; and detecting that the first file meets a first condition for end sharing, and sending a sharing ending notification to the second electronic device. The first condition includes that sharing permission information corresponding to the second electronic device fails to be matched, or that matched sharing permission information corresponding to the second electronic device is invalid.

In a possible implementation of the second aspect, the detecting that the first file meets a first condition for ending sharing includes: first permission information corresponding to the second electronic device fails to be matched based on at least one piece of sharing permission information corresponding to the first file; or it is determined, based on a first management and control policy corresponding to the first file, that first permission information is invalid. In addition, the method further includes: detecting an open operation of the user for opening the first file on the second electronic device, and sending a prompt message to the second electronic device, where the prompt message indicates the second electronic device to display a prompt interface, and the prompt interface is used to prompt that the second electronic device does not have access permission for the first file.

In a possible implementation of the second aspect, the first management and control policy includes: a timeout invalidation policy, used to invalidate the first permission information when it is detected that the first permission information is unused for longer than preset invalidation duration; and/or a link disconnection invalidation policy, used to invalidate the first permission information when it is detected that a communication connection between the first electronic device and the second electronic device is disconnected.

In a possible implementation of the second aspect, the first electronic device includes a distributed file system, and the detecting a first sharing operation of a user for indicating to share a first file with a second electronic device includes: in response to the first sharing operation, creating a first mapping file corresponding to the first file in the distributed file system, where a first mapping relationship exists between the first file and the first mapping file; setting the first permission information and the first management and control policy in the created first mapping file; and sending a first sharing request to the second electronic device, where the first sharing request includes a global identifier of the first mapping file, and the global identifier is a unique identifier of the first mapping file in the first electronic device.

In a possible implementation of the second aspect, the first file and the first mapping file each include a file structure, a dentry structure, and an inode structure. The first mapping relationship includes: the file structure of the first file is correspondingly mapped to the file structure of the first mapping file, the dentry structure of the first file is correspondingly mapped to the dentry structure of the first mapping file, and the inode structure of the first file is correspondingly mapped to the inode structure of the first mapping file.

In a possible implementation of the second aspect, the setting the first permission information and the first management and control policy in the created first mapping file includes setting the first permission information and the first management and control policy in the dentry structure of the first mapping file.

According to a third aspect, an embodiment of this application provides a file sharing method, applied to a second electronic device. The method includes: in response to a received first sharing request corresponding to a first file, displaying the first file, where the first sharing request is a request generated by a first electronic device in response to a first sharing operation of a user, and the first sharing operation is an operation indicating to share the first file with the second electronic device; and in response to a received sharing ending notification corresponding to the first file, stopping displaying the first file, where the sharing ending notification is a notification that is correspondingly generated when the first electronic device detects that the first file meets a first condition for ending sharing, and the first condition includes that sharing permission information corresponding to the second electronic device fails to be matched, or that matched sharing permission information corresponding to the second electronic device is invalid.

In a possible implementation of the third aspect, in response to the received sharing ending notification corresponding to the first file, the method further includes: displaying a prompt interface, where the prompt interface is used to prompt that the second electronic device does not have access permission for the first file.

In a possible implementation of the third aspect, the first sharing request includes a global identifier of a first mapping file, the first mapping file is a file that is created in a distributed file system by the first electronic device in response to the first sharing operation, a first mapping relationship exists between the first mapping file and the first file, and the global identifier is a unique identifier of the first mapping file in the first electronic device.

In a possible implementation of the third aspect, the global identifier includes a uniform resource identifier URI of the first mapping file, and in response to the received first sharing request corresponding to the first file, the displaying the first file includes: in response to the first sharing request, opening the first file based on the URI of the first mapping file and the first mapping relationship; or in response to the first sharing request, obtaining the first file based on the URI in the first sharing request and the first mapping relationship.

In a possible implementation of the third aspect, the first sharing request further includes a first application identifier of a first application, and the first application is an application installed on the second electronic device; and in response to the received first sharing request corresponding to the first file, the displaying the first file includes: in response to the first sharing request, opening the first file by using the first application based on the URI in the first sharing request, the first application identifier, and the first mapping relationship; or in response to the first sharing request, obtaining, based on the URI in the first sharing request, the first application identifier, and the first mapping relationship, the first file, and storing the first file into memory space corresponding to the first application.

According to a fourth aspect, an embodiment of this application provides an electronic device, including one or more processors and one or more memories. The one or more memories store one or more programs. When the one or more programs are executed by the one or more processors, the electronic device is enabled to perform the file sharing method provided in the first aspect to the third aspect and the various possible implementations of the first aspect to the third aspect.

According to a fifth aspect, an embodiment of this application provides a computer-readable storage medium, and the storage medium stores instructions. When the instructions are executed on a computer, the computer is enabled to perform the file sharing method provided in the first aspect to the third aspect and the various possible implementations of the first aspect to the third aspect.

According to a sixth aspect, an embodiment of this application provides a computer program product, including a computer program/instructions. When the computer program/instructions is/are executed by a processor, the file sharing method provided in the first aspect to the third aspect and the various possible implementations of the first aspect to the third aspect is implemented.

### BRIEF DESCRIPTION OF DRAWINGS

FIG. 1A and FIG. 1B are a diagram of a sharing scenario;
FIG. 2a shows an iOS^{™} operating system-based file sharing solution;
FIG. 2b shows a solution of sharing a file in a screen projection manner;
FIG. 3a is a diagram of system interaction for sharing a file based on a distributed file system according to an embodiment of this application;
FIG. 3b is an example of establishing a mapping relationship between a distributed file and a target file according to an embodiment of this application;
FIG. 3c is a diagram of an implementation process of applying a file sharing method to a specific scenario according to an embodiment of this application;
FIG. 4A to FIG. 4C show a sharing scenario of opening a target file across devices according to Embodiment 1 of this application;
FIG. 5 is a flowchart of a file sharing method according to Embodiment 1 of this application;
FIG. 6a is a diagram of a prompt interface displayed by a target device according to Embodiment 1 of this application;
FIG. 6b is a diagram of a prompt interface displayed by another target device according to Embodiment 1 of this application;
FIG. 7 is a flowchart of performing security management and control on a file sharing process based on a security management and control policy according to an embodiment of this application;
FIG. 8a-1 and FIG.8a-2 show a sharing scenario of copying a target file across devices according to Embodiment 2 of this application;
FIG. 8b-1 to FIG. 8b-3 show another sharing scenario of copying a target file across devices according to Embodiment 2 of this application;

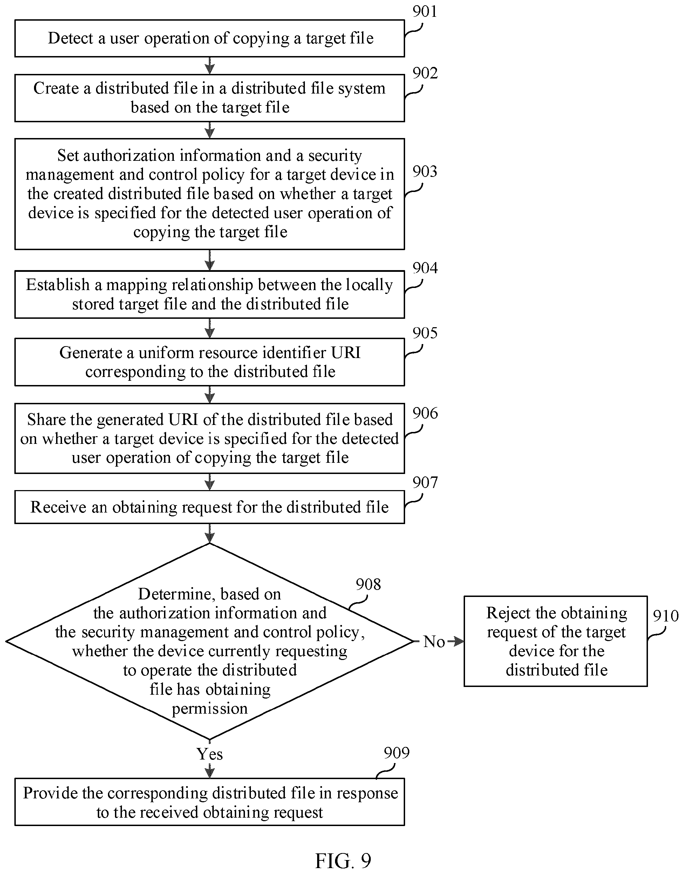

FIG. 9 is a flowchart of a file sharing method according to Embodiment 2 of this application;

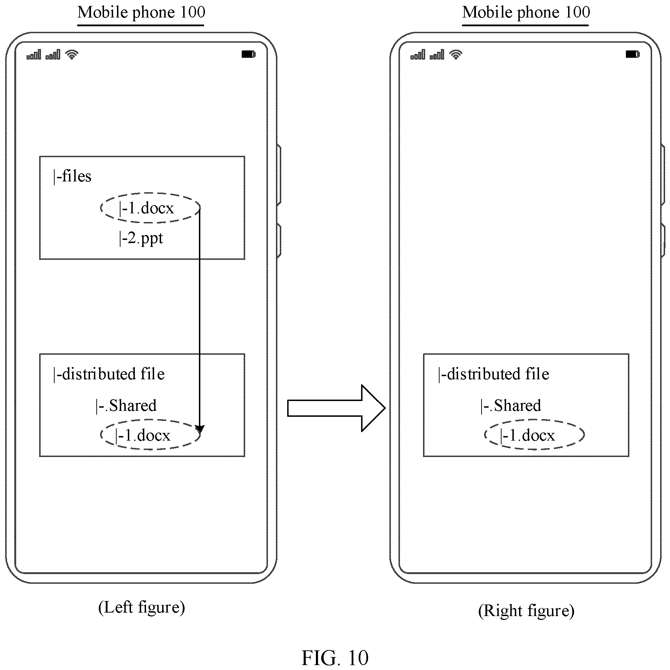

FIG. 10 is a diagram of a distributed file creation process completed on a mobile phone 100 according to Embodiment 2 of this application;

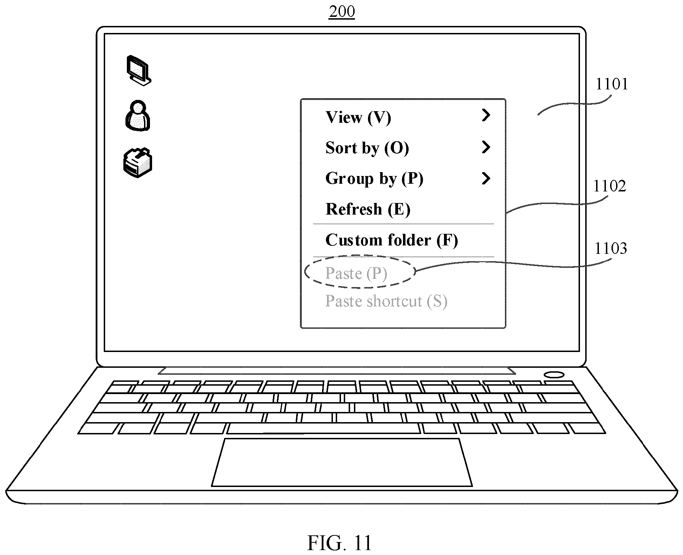

FIG. 11 is a diagram of a prompt interface correspondingly displayed when an obtaining request of a target device is rejected according to Embodiment 2 of this application;

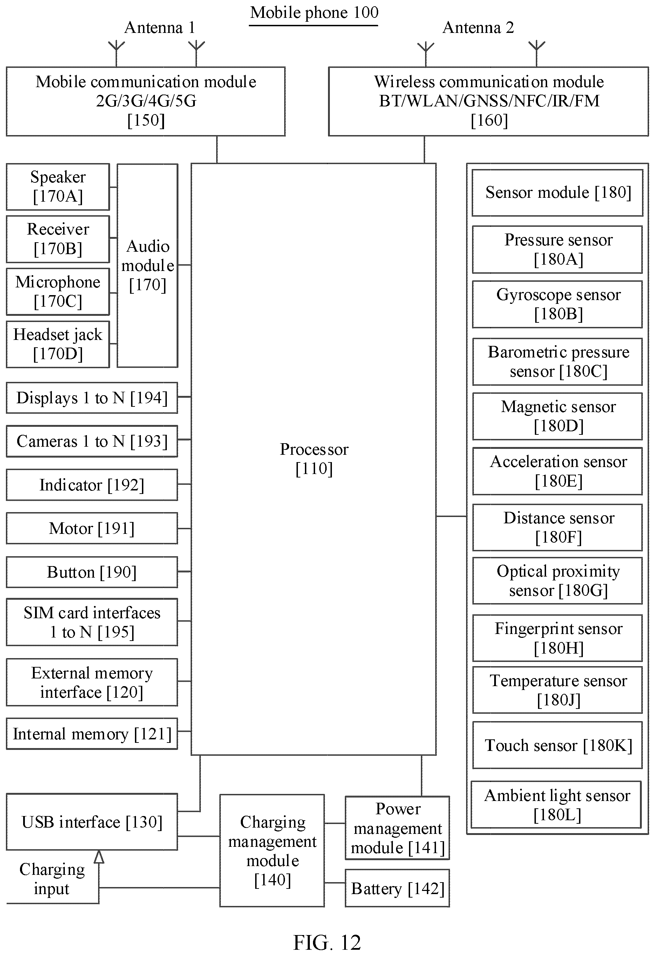

FIG. 12 is a diagram of a hardware structure of a mobile phone 100 according to an embodiment of this application; and

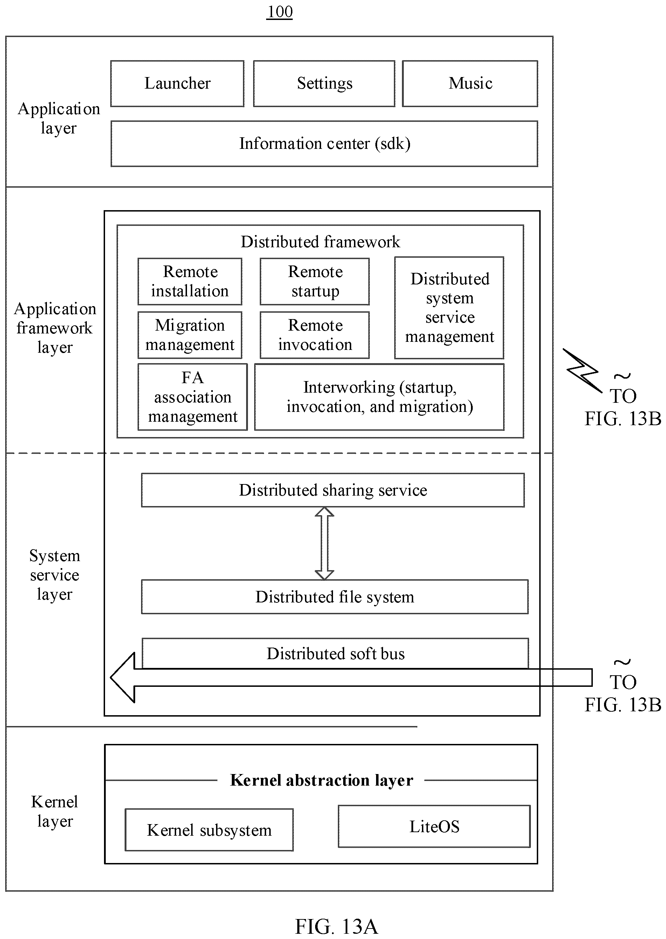

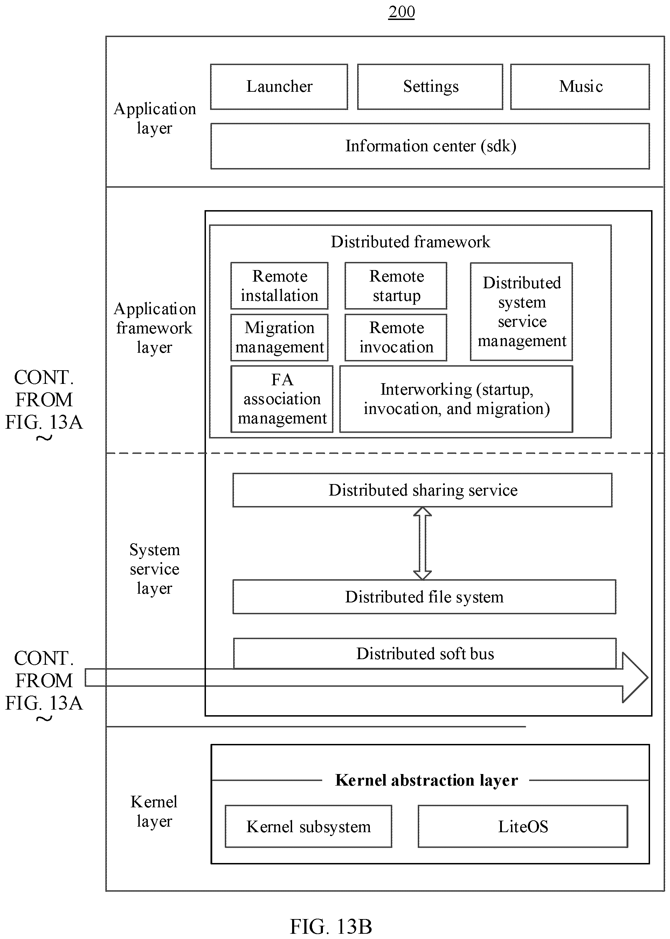

FIG. 13A and FIG. 13B are a block diagram of a distributed system architecture according to an embodiment of this application.

### DESCRIPTION OF EMBODIMENTS

To make the objectives, technical solutions, and advantages of embodiments of this application clearer, the following describes in detail the technical solutions in embodiments of this application with reference to the accompanying drawings and specific implementations of this specification.

It should be further declared that, in embodiments of this application, the steps in the method and the procedure are numbered for ease of reference, instead of limiting a sequence. If there is a sequence between the steps, the text description shall prevail.

To help a person skilled in the art understand the solutions in embodiments of this application, the following first explains and describes some concepts and terms in embodiments of this application.
(1) Handoff (handoff) is one of functions of Apple^{™} to implement cross-device "continuous interworking". This function can implement continuous work between different devices. As the name implies, a task that is not completed by a previous device may be completed by a next device.
(2) A distributed file system (Distributed File System, DFS) means that a physical storage resource managed by a file system is not necessarily directly connected to a local node, but is connected to the node through a computer network, or refers to a complete hierarchical file system formed by combining several different logical disk partitions or volume labels. The node may be a terminal electronic device like a mobile phone or a computer. The DFS provides a logical tree file system structure for resources distributed anywhere on a network, making it easier for a user to access target files distributed on the network. For example, the mobile phone may access, based on the distributed file system, a file on a computer in a same system, the computer may obtain, based on the distributed file system, a file on the mobile phone in the same system, and the like.

Based on the distributed file system, electronic devices located on different nodes may access a corresponding file in the distributed file system based on a file identifier, an index identifier, or the like. A file that can be accessed by the nodes in the distributed file system may be referred to as a distributed file. Each distributed file in the distributed file system may be a mapping file corresponding to a local file of an electronic device on each node.

(3) A uniform resource identifier (Uniform Resource Identifier, URI) is a computer term for a string of characters used to identify a name of an internet resource. The URI allows a user to interact with any resource (including a local resource and an internet resource) through a specific protocol. A definition of the URI may be determined by a solution that includes a determining syntax and a related protocol. The internet resource or the local resource may include an HTML document, an image, a video clip, a program, and the like.

It should be noted herein that, to avoid concept confusion, "file sharing" in embodiments of this application is an action process of sharing a file with another device, and a shared file is referred to as a "target file" in embodiments of this application. In other words, "sharing" is understood as a verb.

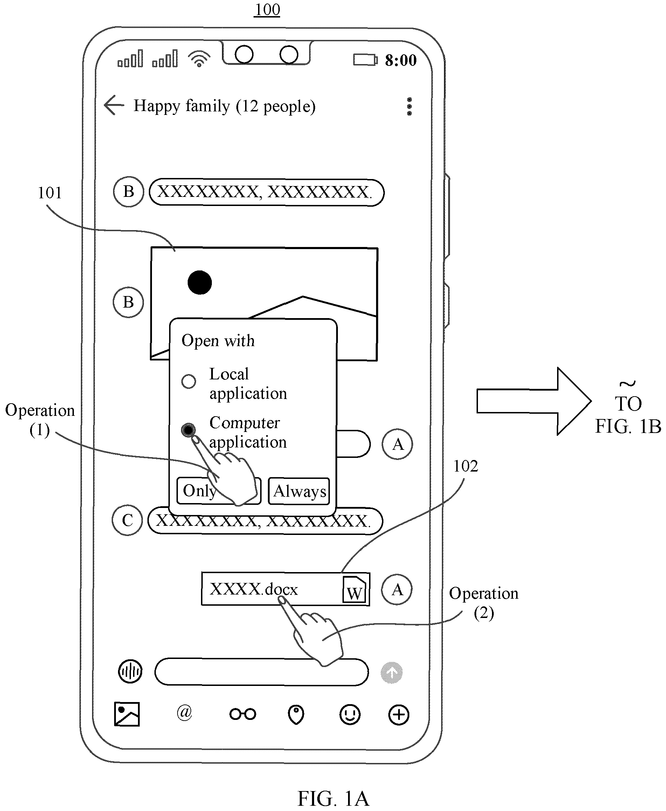

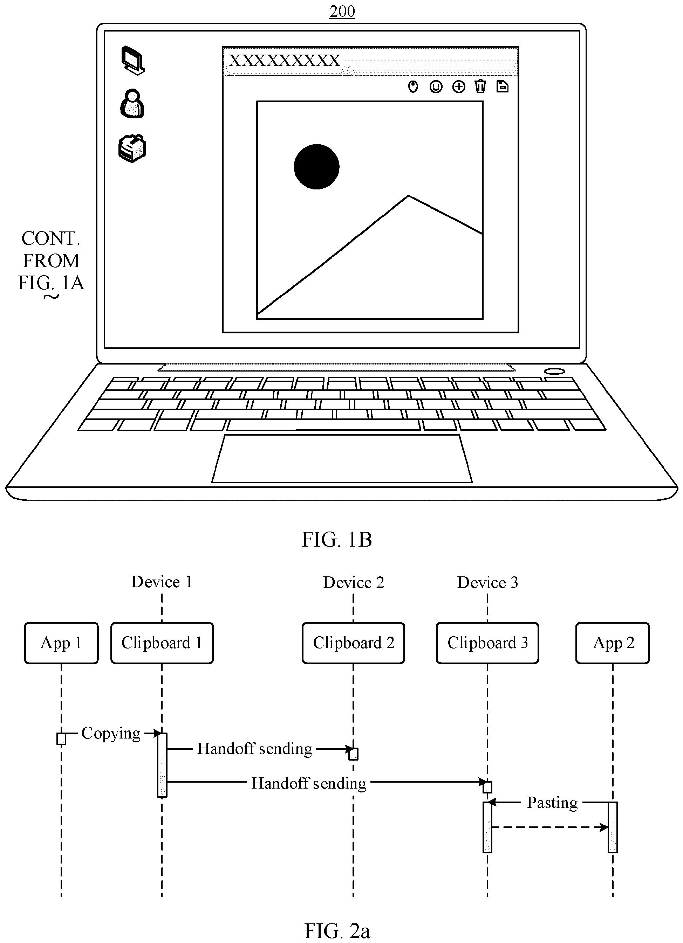

FIG. 1A and FIG. 1B show an application scenario in which a to-be-shared target file needs to be read/written across devices according to an embodiment of this application.

Refer to the scenario shown in FIG. 1A and FIG. 1B. A user may alternatively open, via a personal computer (personal computer, PC) 200, an image 101 received on a chat interface displayed on a mobile phone 100, and perform editing, namely, an operation (1) shown in FIG. 1A and FIG. 1B. Alternatively, the user may choose to open, via the personal computer 200, a word document 102 received on the chat interface displayed on the mobile phone 100, that is, an operation (2) shown in FIG. 1A, to perform a read/write operation on the word document 102. Alternatively, the user needs to copy an image or text content on the mobile phone 100, and paste the image or the text content on a document editing interface displayed on the computer 200.

Based on the foregoing scenario shown in FIG. 1A and FIG. 1B, FIG. 2a shows an iOS^{™} operating system-based file sharing solution.

As shown in FIG. 2a, in an ecosystem of an iOS^{™} operating system, to implement file sharing on different electronic devices, a same Apple ID may be used to log in to iCloud on a device 1, a device 2, and a device 3 that carry the iOS^{™} operating system. Bluetooth (Bluetooth, BT), Wi-Fi, and a handoff function needs to be enabled on the device 1, the device 2, and the device 3. In this way, after a user selects, on an interface of an application (Application, APP) 1 running on the device 1, a to-be-shared file or copies file content, the file or the file content is copied (copied) to a clipboard 1 of the device 1, and is transferred to a clipboard 2 of the device 2 and a clipboard 3 of the device 3. When the user performs a handoff (Handoff) operation on the device 2 or the device 3, the user may directly paste the file or the file content on the clipboard 2 of the device 2 or the clipboard 3 of the device 3 to a specified interface, for example, to an interface of an app 2.

However, a file sharing solution shown in FIG. 2a is limited to the electronic device in the ecosystem of the iOS^{™} operating system. In addition, in a file sharing process, a target file may be sent to a plurality of devices under a same account, and some devices do not need the target file shared in the sharing process. In this case, some important target files are exposed in storage space with a low security level of a device, or because a plurality of devices can open the target file, the target file is easily leaked, maliciously stolen, or the like. In other words, the file sharing solution shown in FIG. 2a has a large security risk.

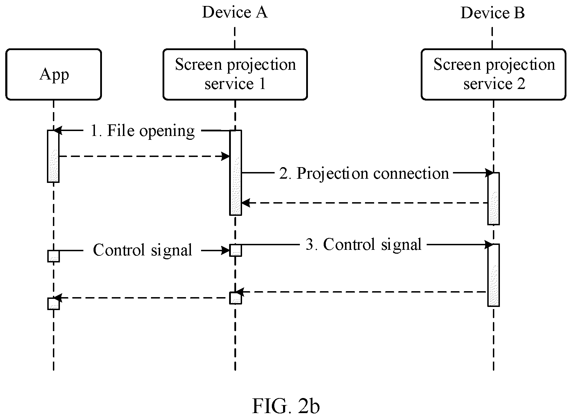

Based on the foregoing scenario shown in FIG. 1A and FIG. 1B, FIG. 2b shows a solution of sharing a file in a screen projection manner.

As shown in FIG. 2b, a device A opens a file by running an app, for example, opens a video file by using a video app, that is, "1. File opening" shown in FIG. 2b. Then, the device A may establish, by using a projection service A, a projection connection to a projection service B on a device B, that is, "2. Projection connection" shown in FIG. 2b. Further, a control signal corresponding to an operation performed by a user on a control interface of the app running on the device A may be sent to the projection service B by using the projection service A. For example, the control signal may be used to control a play progress of the video file.

However, in the file sharing solution implemented in the projection manner shown in FIG. 2b, a data stream corresponding to a to-be-shared target file needs to be sent in real time to another terminal device for playing or displaying. Therefore, an operation like reading or editing cannot be performed on the target file on a projection target device. In other words, a read/write operation cannot be performed. The projection solution shown in FIG. 2b is not a real cross-device file sharing solution either, and cannot meet an operation requirement of the user for reading/writing the target file across devices. For example, the projection solution is not applicable to the application scenario in which the image on the mobile phone is opened by using a computer application for editing in the scenario shown in FIG. 1A and FIG. 1B.

In conclusion, in the application scenario in which the to-be-shared target file needs to be read/written across devices shown in FIG. 1A and FIG. 1B, in the current cross-device file sharing solution, a lack of security management and control on the target file leads to low security of the target file in the sharing process.

To resolve the foregoing problem, an embodiment of this application provides a file sharing method, applied to an electronic device having a distributed file system. An electronic device that provides a to-be-shared target file is referred to as a local device in embodiments of this application, and an electronic device that is authorized to perform a cross-device read/write operation on the target file is referred to as a target device in embodiments of this application.

Specifically, in the method, a distributed file that has a mapping relationship with a local to-be-shared target file is created based on target device information specified when a user triggers a sharing operation, and authorization information for the target device and a security management and control policy corresponding to the distributed file are set in the created distributed file. The authorization information may include device identification information of the target device, and the sharing operation may include an operation of specifying the target device to open the target file, an operation of copying the target file, and the like. The security management and control policy may include a timeout invalidation policy, a link disconnection invalidation policy, and the like. The timeout invalidation policy may be, for example, when it is detected that the target device does not perform a read/write operation on the target file within preset duration, disabling the authorization permission for the target device to end sharing. The link disconnection invalidation policy may be, for example, when it is detected that a communication connection to the target device is disconnected, deleting the authorization information for the target device to end sharing. Further, the target device may open or paste the distributed file across devices based on the distributed file system, and perform an operation like reading/writing on the distributed file. In the sharing process, the local device may perform, based on the security management and control policy, security management and control such as timeout invalidation and link disconnection invalidation on the permission for the target device to operate the distributed file, to improve security of the target file in the sharing process. It may be understood that the foregoing corresponding operation may be mapped to a target file that is on the local device and that is correspondingly mapped to the distributed file.

In this way, the file sharing method provided in this embodiment of this application fully ensures the security of the shared target file. Such security assurance includes: First, the distributed file to which the target file is correspondingly mapped can be opened and read/written only by a specified shared target device, and another unauthorized device cannot open the distributed file to which the target file is correspondingly mapped, and therefore has no permission to operate the target file. Second, security management and control are performed on a process in which the target device opens, or reads/writes the distributed file to which the target file is correspondingly mapped. For example, in a case in which the target device does not operate, within validity duration, the distributed file to which the target file is correspondingly mapped, or a communication connection between the target device and the local device is disconnected, the sharing can be ended in time to ensure the security of the target file.

It may be understood that the communication connection between the local device and the target device may be, for example, a connection manner like Wi-Fi, Bluetooth (BT), or near field communication (near field communication, NFC). In addition, the local device and the target device may implement, based on the distributed file system, sharing of the distributed file created corresponding to the target file. It may be understood that the distributed file system may be understood as a file system including the two nodes: the local device and the target device, or may be understood as file systems that are respectively disposed in operating systems of the local device and the target device and that can communicate with each other. This is not limited herein. A communication connection between the operating systems of the local device and the target device may be, for example, a connection using a distributed soft bus.

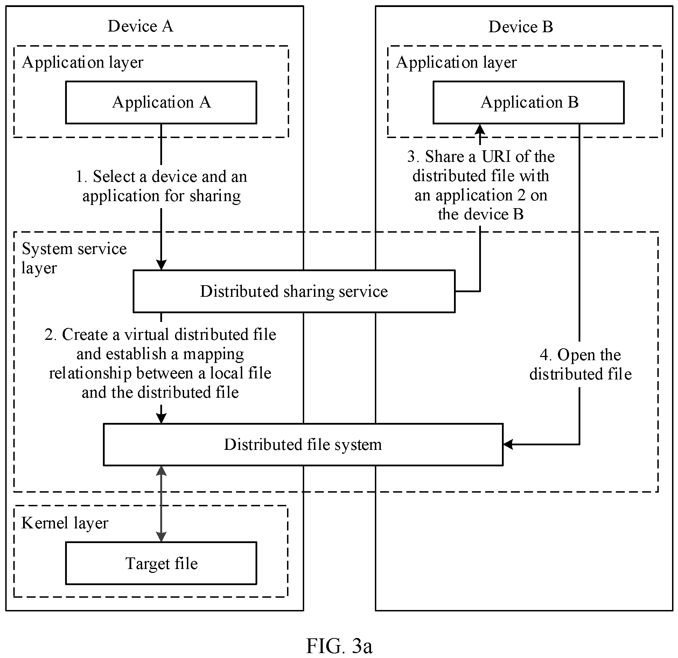

FIG. 3a is a diagram of system interaction for sharing a file based on a distributed file system according to an embodiment of this application.

As shown in FIG. 3a, a local device is a device A, and a target device is a device B. An operating system of the device A includes at least an application A installed at an application layer, a distributed sharing service and a distributed file system that are set at a system service layer, and a target file locally located in storage space of a kernel layer. An operating system of the device B includes at least an application B installed at an application layer, and a distributed sharing service and a distributed file system that are set at a system service layer. As described above, the device A and the device B may be nodes of a same distributed file system, and the device A and the device B may be nodes of a same distributed sharing service.

It may be understood that the file sharing method provided in this embodiment of this application is applicable to an operating system including a distributed sharing service and a distributed file system. The operating systems carried on the device A and the device B may include but are not limited to a Harmony^{™} operating system (HarmonyOS^{™}), Android^{™} (Android^{™}), i0S^{™} and the like. This is not limited herein.

The distributed sharing service may provide the local device with a capability of selecting a remote target device to share a URI of the distributed file. In addition, the distributed sharing service can map a local target file of the local device to a distributed file by using the distributed file system of the local device, and generate the URI of the distributed file. Further, the local device can share the URI of the distributed file with the target device based on the distributed sharing service, to complete a process of authorizing the target device to read/write the distributed file and implementing file sharing. In the created distributed file, the distributed sharing service may further correspondingly set authorization information corresponding to the target device and a security management and control policy for the corresponding authorization information, to implement security management and control on the file sharing process.

Still refer to FIG. 3a, the user may select, on an interface of the application A running on the device A, a target device for opening a shared file, that is, "1. Select a device and an application for sharing" shown in FIG. 3a. In the foregoing scenario shown in FIG. 1A and FIG. 1B, for example, the user may select, on a WeChat^{™} chat interface displayed on the mobile phone 100 (namely, the device A), that a target device for opening the image 101 is the computer 200, and may also select a drawing application on the computer 200 as an application for opening the image.

Further, the distributed sharing service may obtain information related to the target device selected by the user, create a virtual distributed file in the distributed file system, and establish a mapping relationship between the locally stored target file and the created distributed file, that is, "2. Create a virtual distributed file, and establish a mapping relationship between a target file and the distributed file" shown in FIG. 3a. The target file may be, for example, a file selected when the user performs a sharing operation on the interface of the application A. The mapping relationship may include a one-to-one mapping relationship between components such as a file (file) structure, a directory entry (directory entry, dentry) structure, and an inode structure used to search for a corresponding data block. The file structure, the dentry structure, and the inode structure of the target file may describe content of the target file from three dimensions. The file structure is used to describe operation interfaces related to the target file, including interfaces for, for example, opening and reading/writing the target file. The dentry structure is used to record relationships between the target file and another directory and between the target file and another file in a corresponding file system, including subdirectory information and parent directory information of a directory in which the target file is located. The inode structure is used to record a size (size) and basic description information of a file.

In other words, a mapping relationship that is between the target file and the distributed file and that corresponds to the foregoing components may be understood that the file structure of the target file is mapped to the file structure of the distributed file, the dentry structure of the target file is mapped to the dentry structure of the distributed file, and the inode structure corresponding to the target file is mapped to the inode structure corresponding to the distributed file.

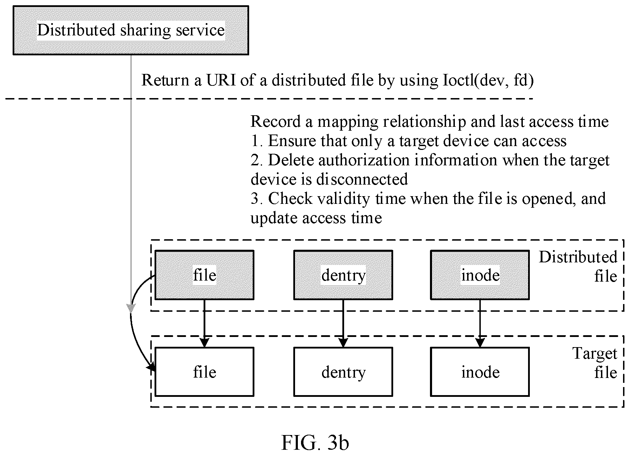

FIG. 3b is an example of establishing the mapping relationship between the distributed file and the target file according to an embodiment of this application.

As shown in FIG. 3b, the mapping relationship between the distributed file and the target file may be established by separately mapping the file structure of the distributed file to the file structure of the target file, mapping the dentry structure of the distributed file to the dentry structure of the target file, and mapping the inode structure of the distributed file to the inode structure of the target file. Optionally, mapping between the structures of the distributed file and the target file may be performed, for example, by constructing a function relationship, or by executing some mapping algorithms. This is not limited herein.

In addition, when creating the distributed file, the distributed sharing service in the device A may write, into the distributed file as a part of the authorization information, information that is related to the target device and that is correspondingly obtained by authorizing and sharing the shared file selected on the interface of the application A to the target device. For example, identity document (Identity document, ID) information of the target device is written into the dentry structure of the distributed file, and is stored as a private data structure on the device A. An ID of the target device may form a part of the authorization information corresponding to the target device. In addition, a security management and control policy, for example, the timeout invalidation policy and/or the link disconnection invalidation policy, corresponding to the distributed file may be further written into the dentry structure of the distributed file. Therefore, security of the shared file in the sharing process can be improved.

After completing creation of the distributed file and establishment of the foregoing mapping relationship, the device A may generate, by using the distributed sharing service, a URI corresponding to the distributed file, and send the URI of the distributed file to the application B on the device B, that is, "3. Share a URI of the distributed file with the application B on the device B" shown in FIG. 3a. The URI of the distributed file may include a resource path corresponding to the distributed file, and the like, so that the application B can accurately find the distributed file to which the target file is correspondingly mapped. Then, the application B on the device B may find the corresponding distributed file in the distributed file system based on the received URI of the distributed file, and open the distributed file for reading/writing, that is, a process of "4. Open the distributed file" shown in FIG. 3a.

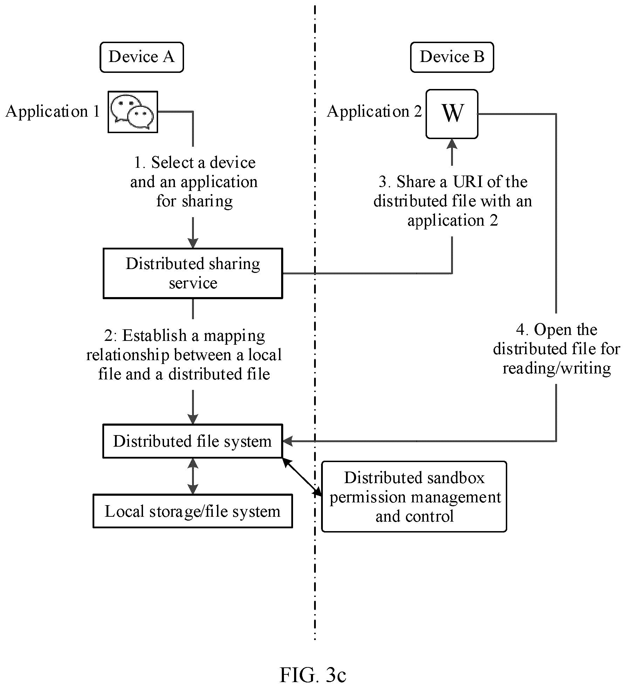

Refer to the scenario shown in FIG. 1A and FIG. 1B. FIG. 3c is a diagram of an implementation process of applying a file sharing method to a specific scenario according to an embodiment of this application.

As shown in FIG. 3c, a device A may be, for example, the mobile phone 100, a device B may be, for example, the computer 200, an application 1 running on the mobile phone 100 may be, for example, a WeChat^{™} application, and an application 2 that is on the device B and that is specified to open a target file may be, for example, a word application. It can be learned from the system interaction process described in FIG. 3a that, based on the file sharing method provided in this embodiment of this application, the user may select, on a WeChat^{™} interface of the device A, a device and an application for sharing, for example, select the word application on the device B. A distributed sharing service on the device A may create a distributed file in a distributed file system, and establish a mapping relationship between a local file and the distributed file. The local file is, for example, stored in local storage space or a local file system of the device A. For example, the local file may be a word document "XXXX.docx" 102 received on the WeChat^{™} chat interface in the scenario shown in FIG. 1A and FIG. 1B, and is also a to-be-shared target file.

Further, the distributed sharing service on the device A may share a URI of the distributed file corresponding to the foregoing created distributed file to the word application on the device B, that is, the application 2. The word application can open the distributed file based on the received URI of the distributed file and perform a read/write operation. It may be understood that the distributed file system applied to the device A may perform permission management and control by using a distributed sandbox mechanism. For example, permission verification is performed on an operation request for opening the distributed file by the word application on the device B, for example, verification is performed on authorization information and whether the authorization information is invalid. Details are described below in detail with reference to corresponding accompanying drawings.

It may be understood that, in some embodiments, the read/write operation performed by the device B on the distributed file by using the distributed file system may also be finally mapped to the target file locally stored in the device A. In other words, a read/write operation on the distributed file may be equivalent to a read/write operation on the target file mapped to the distributed file. In the foregoing file mapping manner, operations such as opening and reading/writing on the local target file are implemented by using the distributed file, so that the target file does not need to be sent from the local device to the target device in the file sharing process. Therefore, the shared target file may be always stored in the local storage space, to prevent the target file from being transferred to another electronic device with low security. This helps improve security of the file sharing process.

It may be understood that an electronic device to which the file sharing method provided in embodiments of this application is applicable may include but is not limited to a mobile phone, a tablet computer, a desktop computer, a laptop computer, a handheld computer, a netbook, an augmented reality (augmented reality, AR)/virtual reality (virtual reality, VR) device, a smart television, a wearable device like a smart watch, a server, a mobile email device, a head unit device, a portable game console, a portable music player, a reader device, a television set embedded with or coupled to one or more processors, or another electronic device that can access a network.

With reference to the scenario shown in FIG. 1A and FIG. 1B and the implementation process shown in FIG. 3, and with reference to embodiments of different application scenarios, the following describes in detail specific implementations of the file sharing method provided in embodiments of this application.

The following first describes a specific implementation process of the file sharing method provided in embodiments of this application with reference to an example sharing scenario of opening a target file across devices in Embodiment 1.

### Embodiment 1

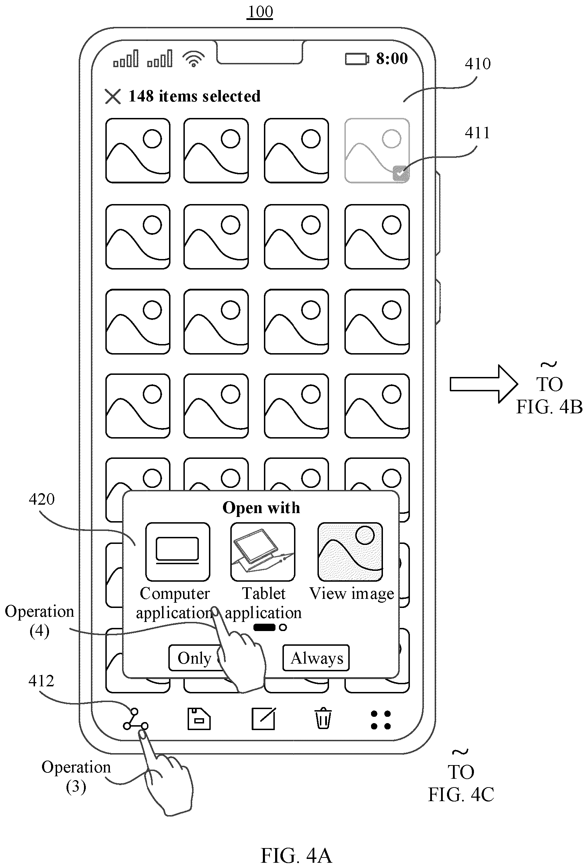

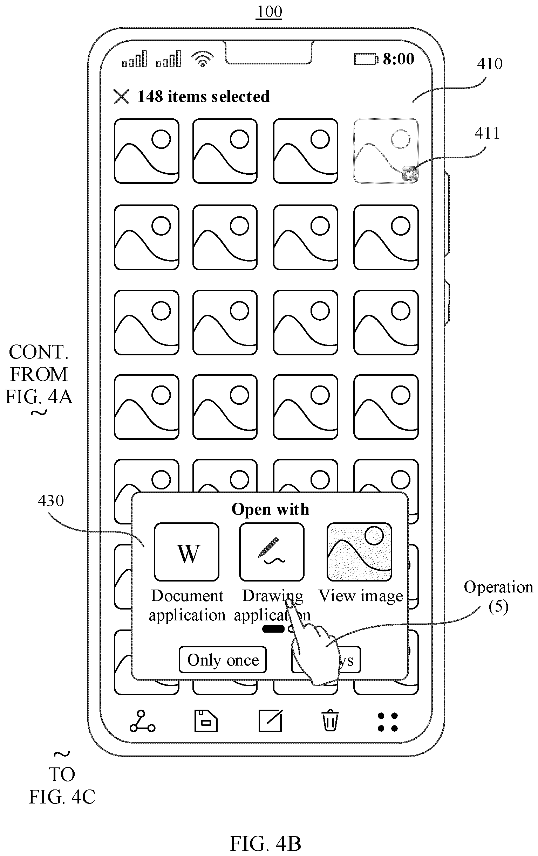

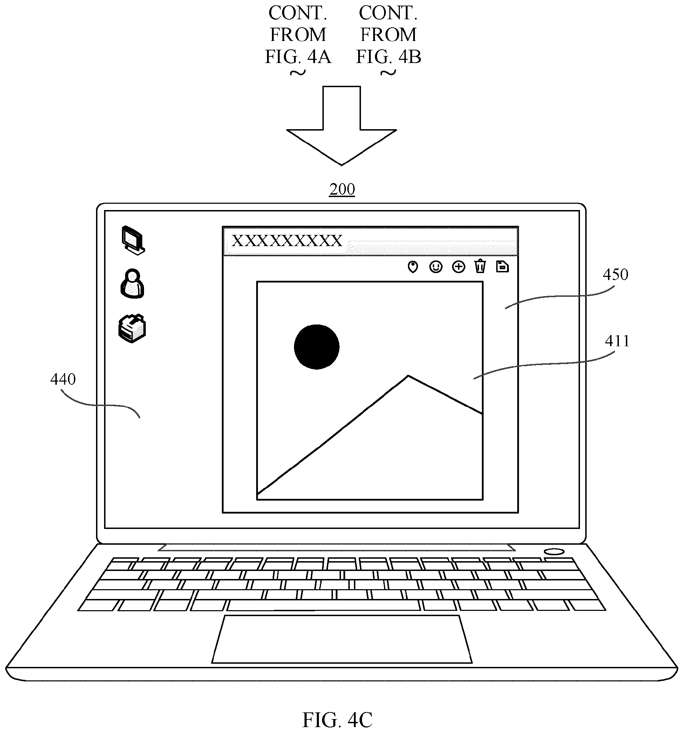

FIG. 4A to FIG. 4C show a sharing scenario of opening a target file across devices according to this application.

As shown in FIG. 4A to FIG. 4C, the scenario includes a mobile phone 100 and a computer 200. The mobile phone 100 and the computer 200 may establish a communication connection by using, for example, Wi-Fi, Bluetooth, or a distributed soft bus. A user may select a photo 411 on a camera interface 410 displayed on the mobile phone 100, and may perform an operation (3) of tapping a share button 412, to display a pop-up window 420 on the mobile phone 100. Further, the user may perform an operation (4) of selecting a "Computer application" opening manner in the pop-up window 420 to determine the computer 200 as a target device.

Further, a pop-up window 430 may be displayed on the camera interface 410 of the mobile phone 100, for the user to select an application installed on the computer 200. For example, the user may perform an operation (5) of selecting a "Drawing" application to open the photo 411 on the pop-up window 430. In this case, the computer 200 may run the drawing application, and display a drawing operation interface 450 on a desktop 440. In this way, the user may perform an editing operation, and the like on the photo 411 on the drawing operation interface 450 displayed on the computer 200.

Based on the sharing scenario shown in FIG. 4A to FIG. 4C, the following describes in detail a specific implementation process of the file sharing method provided in embodiments of this application with reference to the accompanying drawings.

It should be further declared that, in embodiments of this application, steps in the method and the procedure are numbered for ease of reference, instead of limiting a sequence. If there is a sequence between the steps, the text description shall prevail.

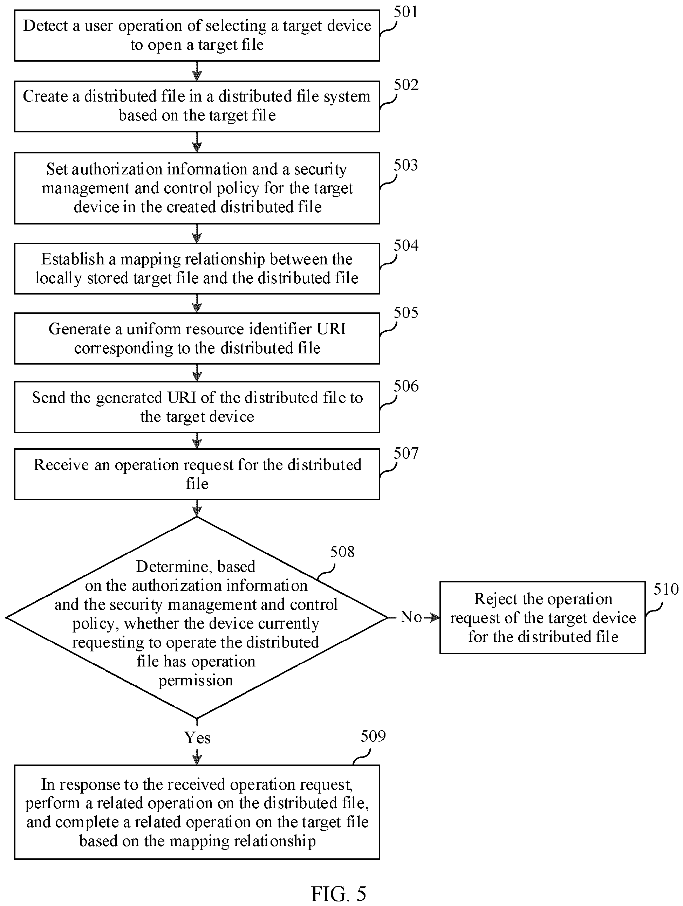

FIG. 5 is a flowchart of a file sharing method according to an embodiment this application.

As shown in FIG. 5, an execution body of each step in the procedure may be a local device that provides a to-be-shared target file, for example, the mobile phone 100 in the sharing scenario shown in FIG. 4A to FIG. 4C. Therefore, to simplify description, when content performed in each step is described below, an execution body of each step is not repeatedly described.

Specifically, the procedure includes the following steps.

501: Detect a user operation of selecting a target device to open a target file.

For example, a user may perform, on an interface displayed on an electronic device like the mobile phone 100, an operation of sharing the target file with the target device, and the user may further choose to use a specified application on the target device to open the target file. The mobile phone 100 may detect a corresponding user operation, and display a corresponding interface. Refer to the sharing scenario shown in FIG. 4A to FIG. 4C. For example, the user may perform the operation (3) to the operation (5) on the camera interface 410 displayed on the mobile phone 100, to share the photo 411 with the drawing application on the computer 200. The photo 411 is the target file, and the computer 200 is the target device.

It may be understood that, in application scenarios of some other embodiments, a target device correspondingly selected in a user operation detected by an electronic device like the mobile phone 100 may alternatively be another electronic device, and an application correspondingly selected on the target device for processing a target file may alternatively be another application on an electronic device like the computer 200. The target file operated and shared by the user may alternatively be a file like a document or a video. This is not limited herein.

502: Create a distributed file in a distributed file system based on the target file.

For example, the mobile phone 100 may create the distributed file in the distributed file system based on a content structure of the target file selected for sharing in the user operation. For example, the creation process may be: creating a file structure, a dentry structure, and an inode structure of the distributed file based on a file structure, a dentry structure, and an inode structure of the target file. The file structure, the dentry structure, and the inode structure of the created distributed file may be implemented, for example, by copying the file structure, the dentry structure, and the inode structure of the target file.

It may be understood that the distributed file created in the distributed file system may provide an access node for the target device based on a sharing capability of the distributed file system. A specific process in which the target device accesses the foregoing distributed file created in the distributed file system is described in detail in the following corresponding steps. Details are not described herein.

503: Set authorization information and a security management and control policy for the target device in the created distributed file.

For example, after completing creation of the distributed file, the mobile phone 100 may write, into the distributed file, related information for authorizing the target device to perform an operation like opening or reading/writing on the distributed file, that is, set authorization information. For example, the authorization information may be written into the dentry structure of the created distributed file, and stored as a private data structure in the dentry structure. In some other embodiments, the authorization information may alternatively be written into another structure of the distributed file or a newly created private data structure. This is not limited herein.

In addition, the mobile phone 100 may further set a corresponding security management and control policy in the created distributed file. The security management and control policy is used to determine some security limiting conditions for ensuring security of the distributed file in an operation process of reading/writing the distributed file. As described above, the security management and control policy may include, for example, a timeout invalidation policy and/or a link disconnection invalidation policy, or may include another policy that can perform security management and control on a file sharing process. This is not limited herein.

A specific implementation process in which the mobile phone 100 performs security management and control on the file sharing process based on the timeout invalidation policy and/or the link disconnection invalidation policy that are/is correspondingly set in the distributed file is described in detail below with reference to corresponding accompanying drawings. Details are not described herein.

504: Establish a mapping relationship between the locally stored target file and the distributed file.

For example, the mobile phone 100 may establish the mapping relationship between the locally stored target file and the distributed file created in the process of performing step 502 or the distributed file for which the authorization information and the security management and control policy are set in the process of performing step 503. In other words, in some embodiments, after performing step 503 to complete setting the authorization information and the corresponding security management and control policy for the target device in the distributed file, the mobile phone 100 may perform step 504 to establish the mapping relationship. In some other embodiments, after performing step 502 to create the distributed file, the mobile phone 100 may alternatively perform step 504 to establish the mapping relationship. This is not limited herein. For a process of establishing the mapping relationship between the target file and the distributed file, refer to FIG. 3b and related descriptions. Details are not described herein.

It may be understood that, after the mapping relationship between the distributed file and the target file is created, as described above, the security management and control policy, for example, the timeout invalidation policy and/or the link disconnection invalidation policy, may be set in the distributed file. It may be understood that a module that is in a system of the mobile phone 100 and that is responsible for managing a communication connection link, for example, link management, between the mobile phone 100 and the target device, may record the foregoing mapping relationship, last time at which the target device accesses the distributed file, and the like.

In this way, refer to FIG. 3b. The mobile phone 100 may implement, based on the foregoing set security management and control policy like the timeout invalidation policy and/or the link disconnection invalidation policy, triple security assurance: First, it can be ensured that only the target device can access the distributed file; second, it can be ensured that the authorization information for the target device is deleted when the target device is disconnected from the mobile phone 100 serving as the local device; and third, validity time can be checked when the target device opens the distributed file, for example, whether a time interval between current opening and last closing of the file exceeds a validity time threshold is checked, and access time is updated, to ensure that the target device stably accesses the distributed file within the validity time.

A specific implementation process in which the mobile phone 100 performs security management and control on the file sharing process based on the timeout invalidation policy and/or the link disconnection invalidation policy that are/is correspondingly set in the distributed file is described in detail below with reference to corresponding accompanying drawings. Details are not described herein.

505: Generate a uniform resource identifier URI corresponding to the distributed file.

For example, after the mapping relationship between the target file in the mobile phone 100 and the distributed file is created, the mobile phone 100 may further generate the uniform resource identifier used to mark a distributed file resource, that is, the URI of the distributed file.

For example, in a distributed file system based-operating system carried on the mobile phone 100, for example, a distributed sharing service may initiate resource invocation for the distributed file to the distributed file system by using an Ioctl function. It may be understood that the Ioctl function is a device control interface function in a device driver, and may generally implement functions such as opening, closing, reading, and writing via the device. The Ioctl function may trigger the distributed file system to generate the foregoing URI of the distributed file. Therefore, the distributed sharing service may obtain, by invoking the Ioctl function, the URI that is of the distributed file and that is returned by the distributed file system.

It may be understood that, for example, for a form of the Ioctl function for invoking the distributed file, refer to Ioctl(dev, fd), where an invocation parameter (dev, fd) may be a resource path parameter of the distributed file, and the like. This is not limited herein.

506: Send the generated URI of the distributed file to the target device.

For example, the mobile phone 100 may send the URI of the distributed file to the target device based on a cross-device sharing capability of the distributed sharing service, for example, send the URI of the distributed file to the computer 200 in the sharing scenario shown in FIG. 4A to FIG. 4C. In other words, the target device may obtain, based on the sharing capability of the distributed sharing service, the URI that is of the distributed file and that is shared by the currently connected mobile phone 100.

It may be understood that, in some embodiments, the mobile phone 100 may send, to a plurality of currently connected target devices, URIs of distributed files to which different target files are correspondingly mapped. For example, the mobile phone 100 may send, to the computer 200, a URI of a distributed file to which a photo file is correspondingly mapped, and send, to a desktop computer at home, a URI of a distributed file to which a word document is correspondingly mapped. In this way, cross-device file sharing can be implemented between an electronic device like the mobile phone 100 serving as the local device and a plurality of target devices. This helps improve operation efficiency and use experience of a user.

507: Receive an operation request for the distributed file.

For example, after the mobile phone 100 shares the URI of the distributed file with the target device, the target device may open, based on the received URI of the distributed file, the distributed file to perform a read/write operation. Content of the target file correspondingly mapped to the distributed file may also be correspondingly read/written. In this way, the mobile phone 100 may receive operation requests that the target device requests to open the content of the target file or perform operations such as reading/writing on the content of the target file. These operation requests may be represented as operation requests for the distributed file.

It may be understood that, in some embodiments, the mobile phone 100 may share the URI of the distributed file with a plurality of target devices. Therefore, the mobile phone 100 may also receive operation requests of the plurality of target devices. In some embodiments, the mobile phone 100 may further receive operation requests of the plurality of target devices for different distributed files. These operation requests are initiated based on the distributed URI sent by the mobile phone 100 in step 506. This is not limited herein. In this way, different distributed files may be designated to different target devices for use, and a targeted sharing mechanism helps ensure security of the target files correspondingly mapped to the distributed files.

508: Determine, based on the authorization information and the security management and control policy, whether the device currently requesting to operate the distributed file has operation permission. If a determining result is yes, it indicates that the target device has read/write permission, and the following step 509 may be performed to respond to an operation request of the target device for, for example, opening and reading/writing the distributed file. If the determining result is no, it indicates that the target device does not have read/write permission, and the following step 510 is performed to reject the operation request of the target device for the distributed file.

For example, the mobile phone 100 may verify, based on the authorization information set in the distributed file, whether the device currently requesting to open the distributed file has matched authorization information. For example, determining is performed by matching an ID of the device with an ID of the target device in the authorization information.

It may be understood that the device requesting to open the distributed file may be a target device whose permission is already invalid. For example, the mobile phone 100 may have deleted authorization information for the device from a corresponding distributed file. Alternatively, the device requesting to open the distributed file may be an electronic device on which some malicious programs run. The malicious program obtains the URI that is of the distributed file and that is shared by an electronic device like the mobile phone 100, attempts to open the distributed file to steal data, and the like. Therefore, when receiving the operation request for the distributed file, the mobile phone 100 needs to first verify whether the device that initiates the operation request has the operation permission. In this way, security of the distributed file shared across devices can be improved, correspondingly, security of the target file correspondingly mapped to the distributed file is also improved, and therefore security of the file sharing process is improved.

It may be understood that in the file sharing process, the mobile phone 100 may manage and control the created distributed file based on the set security management and control policy. For example, based on the timeout invalidation policy, it may be checked whether a time interval between a moment at which the target device opens the distributed file this time and a recorded moment at which the target device closes the distributed file last time exceeds a validity time threshold. If the time interval exceeds the validity time threshold, it is determined that a preset condition for ending authorization is met; or if the time interval does not exceed the validity time threshold, it is determined that the preset condition for ending the authorization is not met. The validity time threshold may be, for example, 2 minutes or another value. This is not limited herein. In addition, the mobile phone 100 may update, in time, access time corresponding to opening the distributed file this time. In some other embodiments, the mobile phone 100 may alternatively determine, by checking whether another time interval exceeds a preset validity time threshold, whether the preset condition for ending the authorization is met.

For another example, for the link disconnection invalidation policy, when it is detected that the target device is disconnected from the local device, it may be determined that the preset condition for ending the authorization is met, and then authorization for the target device is ended, for example, the authorization information for the target device is deleted. In this case, the device currently requesting to operate the distributed file does not have the operation permission.

It may be understood that, in some embodiments, the mobile phone 100 may share, with different target devices, a URI of a distributed file to which a same target file is correspondingly mapped. In this case, if a target device meets a preset condition for ending the authorization, the mobile phone 100 may delete only authorization information that corresponds to the target device and that is set in the distributed file, and retain authorization information corresponding to another target device. After all authorization information corresponding to the plurality of authorized target devices is deleted from the distributed file, the mobile phone 100 may delete the corresponding distributed file.

Specifically, a specific implementation process of performing security management and control on the file sharing process based on the security management and control policy is described in detail below with reference to the accompanying drawings. Details are not described herein.

509: In response to the received operation request, perform a related operation on the distributed file, and complete a related operation on the target file based on the mapping relationship.

For example, if the mobile phone 100 verifies that the target device currently operating the distributed file has the operation permission, the mobile phone 100 may allow, in response to the operation request of the target device for the corresponding distributed file, the target device to open the distributed file, and perform operations such as page turning reading, modification, and deletion on content of the opened distributed file, that is, the preceding read/write operation.

It may be understood that the related operation on the distributed file is converted into an operation on the local target file of the mobile phone 100 based on the mapping relationship. Therefore, content of the corresponding target file may also be correspondingly modified by the operation like reading/writing.

510: Reject the operation request of the target device for the distributed file.

For example, if the mobile phone 100 verifies that the target device currently operating the distributed file does not have the operation permission, the mobile phone 100 may reject the operation request of the target device for the distributed file until the sharing ends. In this case, a corresponding prompt message may be displayed on a display interface of the mobile phone 100 serving as the local device or a display interface of the target device, to prompt that the sharing ends, prompt the user to perform a next operation, or the like.

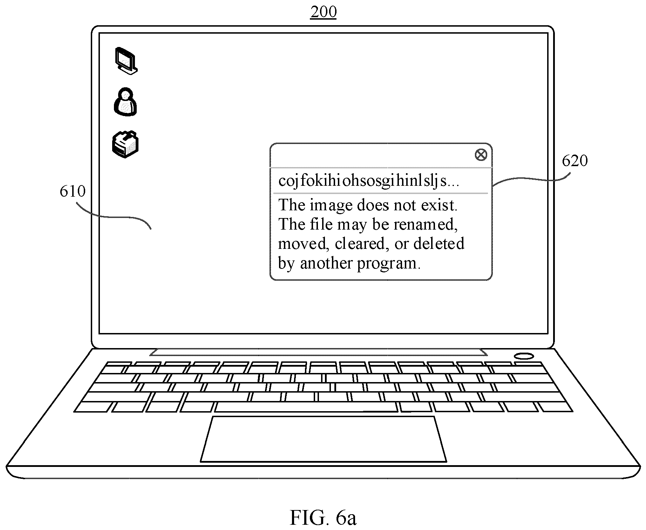

Based on the sharing scenario shown in FIG. 4A to FIG. 4C, FIG. 6a is a diagram of a prompt interface displayed by a target device according to an embodiment of this application.

In a process in which the mobile phone 100 shares the photo 411, if the mobile phone 100 determines, when performing step 508, that the computer 200 does not have permission to open the photo 411, for example, if duration in which no operation is performed on the shared photo 411 before a moment at which the computer 200 currently opens the photo 411 times out, or a communication connection between the mobile phone 100 and the computer 200 is disconnected during sharing, the mobile phone 100 may reject an operation request for opening the photo 411 by the computer 200. In this case, as shown in FIG. 6a, a prompt window 620 may be displayed on a desktop 610 of the computer 200, and content displayed in the prompt window 620 may be, for example, "The image does not exist. The image may be renamed, moved, cleared, or deleted by another program.", to notify the user that the computer 200 currently used by the user does not have the permission to open the photo shared by the mobile phone 100, or notify the user that the sharing ends.

In some other embodiments, the prompt content displayed in the prompt window 620 may alternatively be other content. This is not limited herein.

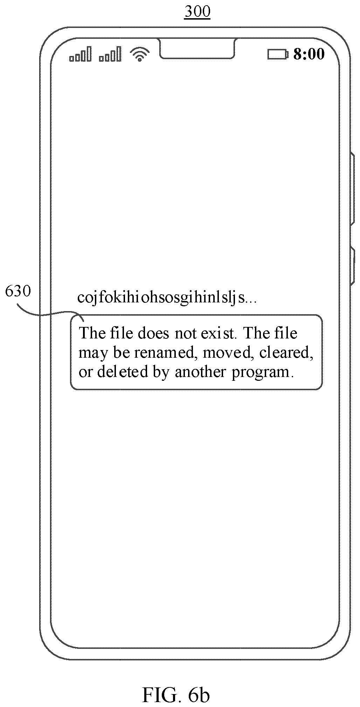

FIG. 6b is a diagram of a prompt interface displayed by another target device according to an embodiment of this application.

As shown in FIG. 6b, in some other embodiments, for example, a sharing communication connection of another file is established between a mobile phone 300 and the mobile phone 100, but the mobile phone 300 is to open the photo 411 on the mobile phone 100. In this case, when performing step 508, the mobile phone 100 may determine that the authorization information of the distributed file corresponding to the photo 411 does not include the authorization information for the mobile phone 300. Therefore, the mobile phone 100 may determine that the mobile phone 300 does not have permission to access the photo 411, and may reject an open operation request of the mobile phone 300. In this case, the mobile phone 300 may display a prompt pop-up window 630 shown in FIG. 6b. The prompt pop-up window 630 may also display the prompt content "The image does not exist. The image may be renamed, moved, cleared, or deleted by another program.", or other content. This is not limited herein.

In some other embodiments, when the target device loses permission or has no permission to operate the distributed file, an interface of the target device may alternatively be different from the prompt interface shown in FIG. 6a or FIG. 6b and may display a prompt interface of another style, or the mobile phone 100 serving as the local device may display a corresponding prompt interface. This is not limited herein.

It may be understood that, after the target device loses the operation permission, if the user needs to perform the operation like opening or reading/writing the target file across devices again, the user may perform the operation of selecting the target device to open the target file again on the mobile phone 100. The mobile phone 100 may re-execute, in response to the user operation, the file sharing process described in the foregoing steps 501 to 510.

With reference to the accompanying drawings, the following describes in detail a specific implementation process in which the mobile phone 100 performs security management and control on the file sharing process based on the security management and control policy that is correspondingly set in the distributed file in step 508.

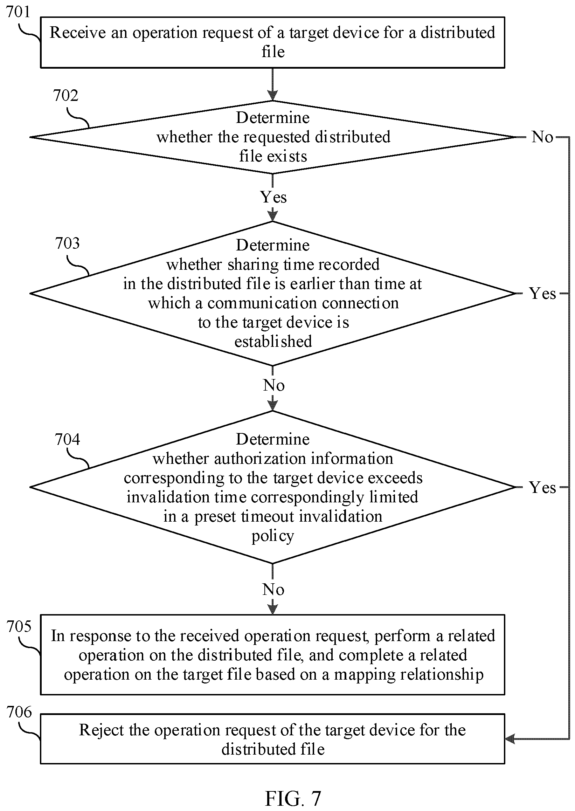

FIG. 7 is a flowchart of performing security management and control on a file sharing process based on a security management and control policy according to an embodiment of this application. It may be understood that an execution body of the procedure shown in FIG. 7 is also the mobile phone 100. To simplify description, when specific execution content of each step is described below, an execution body of each step is not described again.

As shown in FIG. 7, the procedure includes the following steps.

701: Receive an operation request for a distributed file.

Execution content of step 701 is the same as that of step 507, and performing step 701 is performing step 507. For a specific process of responding to the operation request, refer to related descriptions in step 507. Details are not described herein.

As described above, after performing the foregoing step 507 of receiving the operation request, the mobile phone 100 may determine, based on the authorization information and the security management and control policy, whether a requester device corresponding to the operation request has the operation permission for the distributed file, that is, perform the determining process in the foregoing step 508. The determining process is specifically embodied in the following steps 702 to 704.

702: Determine whether the requested distributed file exists. If a determining result is yes, the following step 703 continues to be performed to determine whether a link disconnection occurs in a sharing process. If a determining result is no, the following step 706 may be performed to reject the operation request.

For example, based on the received operation request, the mobile phone 100 may first determine whether a corresponding distributed file still exists in a distributed file system. It may be understood that, in a file sharing process, a preset security management and control policy may cause deletion of the distributed file, or cause deletion of authorization information for a target device in the distributed file. For example, based on a link disconnection invalidation policy in the preset security management and control policy, authorization information of a corresponding target device in the distributed file may be deleted when a communication connection between the mobile phone 100 and the target device is disconnected. After authorization information of all target devices recorded in the corresponding distributed file is deleted, the distributed file may also be deleted.

703: Determine whether sharing time recorded in the distributed file is earlier than time at which the communication connection to the target device is established. If the sharing time is earlier than the time at which the communication connection to the target device is established, it indicates that disconnection of the communication connection between the mobile phone 100 and the target device occurs in the file sharing process, and the shared distributed file and the correspondingly mapped target file may have a security risk. Therefore, the following step 706 may be performed to reject the operation request. If the sharing time is not earlier than the time at which the communication connection to the target device is established, it indicates that no link disconnection occurs in the file sharing process, and both the shared distributed file and the correspondingly mapped target file are secure. In this case, the following step 704 may be performed to further determine invalidation time.

For example, when sharing a URI of the distributed file with the target device, the mobile phone 100 may record the moment as the sharing time. The recorded sharing time may be used as start time of a timeout invalidation policy in the preset security management and control policy on the mobile phone 100. In addition, when establishing the communication connection to the target device, the mobile phone 100 may record link establishment time. Therefore, before performing determining based on the timeout invalidation policy, the mobile phone 100 may first compare the sharing time with the link establishment time of the target device. If the link establishment time between the mobile phone 100 and the target device is earlier than the sharing time, that is, the communication connection has been established between the mobile phone 100 and the target device before the file sharing process starts, it indicates that no link disconnection occurs in the file sharing process, and both the shared distributed file and the correspondingly mapped target file are secure. In this case, the following step 704 may continue to be performed to further determine invalidation time of the authorization information.

If the sharing time recorded when the mobile phone 100 shares the URI of the distributed file is earlier than the link establishment time, it indicates that disconnection of the communication connection between the mobile phone 100 and the target device occurs in the file sharing process, and the shared distributed file and the correspondingly mapped target file may have a security risk. In this case, the following step 706 needs to be performed to reject the operation request of the target device.

704: Determine whether the authorization information corresponding to the target device exceeds invalidation time correspondingly limited in the preset timeout invalidation policy. If a determining result is yes, that is, the authorization information is invalid, step 706 may be performed to reject the received operation request. If a determining result is no, that is, the authorization information is not invalid, it indicates that the target device still has the operation permission such as opening or reading/writing the distributed file at this time. In this case, the following step 705 may be performed to respond to the received operation request.

For example, the mobile phone 100 may determine the validity duration of the authorization information for the target device based on the timeout invalidation policy in the preset security management and control policy in the distributed file. The validity duration may be, for example, reasonable preset duration such as 2 minutes, 3 minutes, 4 minutes, or 5 minutes. Based on the validity duration, the invalidation time of the authorization information may be determined based on start time updated latest. If the mobile phone 100 determines, based on the start time and time at which the operation request is currently received, that a time difference between the start time and the time at which the operation request is currently received exceeds the invalidation time, it indicates that the authorization information corresponding to the target device is invalid, and step 706 may be performed. If the mobile phone 100 determines that the time difference between the time at which the operation request is currently received and the start time does not exceed the invalidation time, it indicates that the authorization information is not invalid, and the following step 705 may be performed.

It may be understood that the start time may be, for example, sharing time correspondingly recorded when the URI of the distributed file is shared, or may be time at which the distributed file is closed, or time after no read/write operation is performed for a specific period of time. This is not limited herein.

It may be understood that, in a process in which the target device opens the distributed file to perform the operation like reading/writing, the timeout invalidation policy may not take effect. When the target device closes the distributed file, or detects that the target device does not perform any read/write operation on the distributed file for a specific period of time, the recorded sharing time may be updated based on time at which the distributed file is closed or time after no read/write operation is performed for the specific period of time, and used as the start time of the timeout invalidation policy.

For a process of obtaining the time corresponding to closing the distributed file by the target device or obtaining time corresponding to opening the distributed file by the target device, refer to the following example. When the target device opens the distributed file, a related preset parameter of an application that opens the distributed file may be correspondingly modified in the target device. For example, a set count value that corresponds to the timeout invalidation policy and that is in the corresponding application process may be modified, for example, the corresponding count value may be set from "0" to "1", that is, increased by one. When the target device closes the distributed file, the mobile phone 100 may set the corresponding count value from "1" to "0". The mobile phone 100 may obtain, based on a sharing capability of a distributed sharing service, the foregoing correspondingly updated count value in the target device, to determine whether the target device currently opens the distributed file. If the count value obtained by the mobile phone 100 is "1", and it is determined that the target device closes the distributed file, invalidation time in the distributed file may be determined. The invalidation time may be invalidation time corresponding to authorization information of the target device, or may be invalidation time corresponding to the distributed file. This is not limited herein.

705: In response to the received operation request, perform a related operation on the distributed file, and complete a related operation on the target file based on a mapping relationship.

Execution content of step 705 is the same as that of step 509, and performing step 705 is performing step 509. For a specific process of responding to the operation request, refer to related descriptions in step 509. Details are not described herein.

706: Reject the operation request of the target device for the distributed file.

Execution content of step 706 is the same as that of step 510, and performing step 706 is performing step 510. For a specific process of responding to the operation request, refer to related descriptions in step 510. Details are not described herein.

With reference to the implementation processes of the steps in the flowcharts shown in FIG. 5 and FIG. 7, it may be understood that, in the sharing process of opening the target file across devices, an electronic device like the mobile phone 100 may create a distributed file to which the target device is mapped when detecting an operation of a user for selecting a target device for opening, to complete sharing. In addition, based on the foregoing file sharing solution provided in this embodiment of this application, the mobile phone 100 may perform, based on the authorization information for the target device and the security management and control policy that are preset in the distributed file, permission management and control on operations such as opening the distributed file by the target device and performing reading/writing on the distributed file by the target device. Therefore, security of the target file correspondingly mapped to the distributed file in the sharing process is effectively improved.

The following first describes a specific implementation process of the file sharing method provided in embodiments of this application with reference to an example application scenario of copying a target file across devices in Embodiment 1.

### Embodiment 2

FIG. 8a-1 and FIG. 8a-2 show a sharing scenario of copying a target file across devices according to an embodiment of this application.

As shown in FIG. 8a-1 and FIG. 8a-2, a mobile phone 100 and a computer 200 in this scenario may establish a communication connection by using, for example, Wi-Fi, Bluetooth, or a distributed soft bus. A user may perform an operation on an image browsing interface 810 of the mobile phone 100 to copy an image, and perform an operation on a memo interface 820 opened on the computer 200 to paste the image.

It may be understood that, in this scenario, the user does not specify a target device when operating on the mobile phone 100 to copy the image, and the mobile phone 100 shares, by default, an image file selected by the user with one or more electronic devices currently connected to the mobile phone 100. For example, the electronic device may be a device connected to the mobile phone 100 by using a distributed soft bus, or a device connected to the mobile phone 100 by using Bluetooth. This is not limited herein. However, in this sharing process, the image file is not sent to all devices, but each device connected to the mobile phone 100 may obtain, based on authorization information and a URI of a distributed file to which the image file is correspondingly mapped, the image file for pasting. A specific sharing process is described in detail below with reference to the accompanying drawings. Details are not described herein.

Therefore, each electronic device currently communicatively connected to the mobile phone 100 may obtain the image copied on the mobile phone 100, and paste the copied image on an interface specified by the user. For example, the computer 200 may paste, on the memo interface 820 in response to a user operation, the image copied by the user on the mobile phone 100.

FIG. 8b-1 to FIG. 8b-3 show another sharing scenario of copying a target file across devices according to an embodiment of this application.

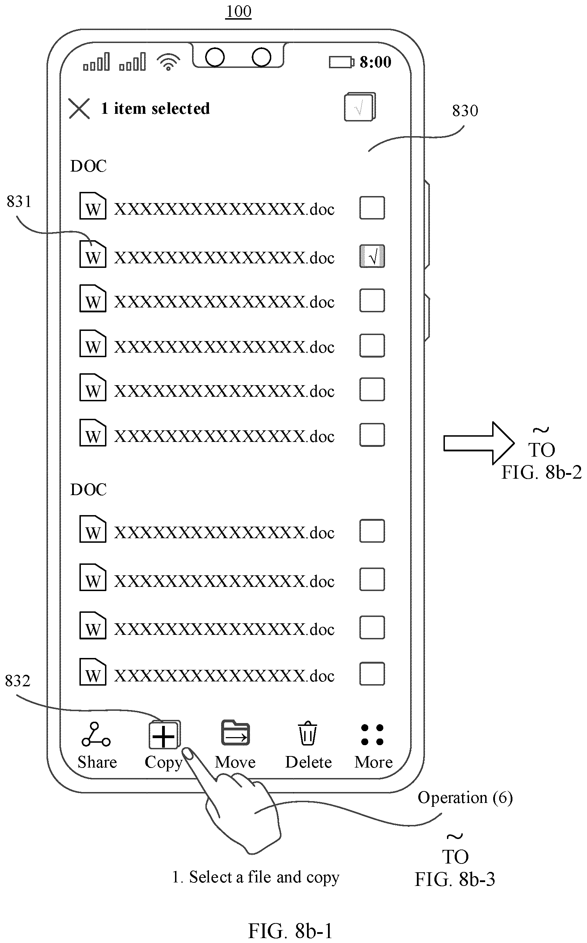

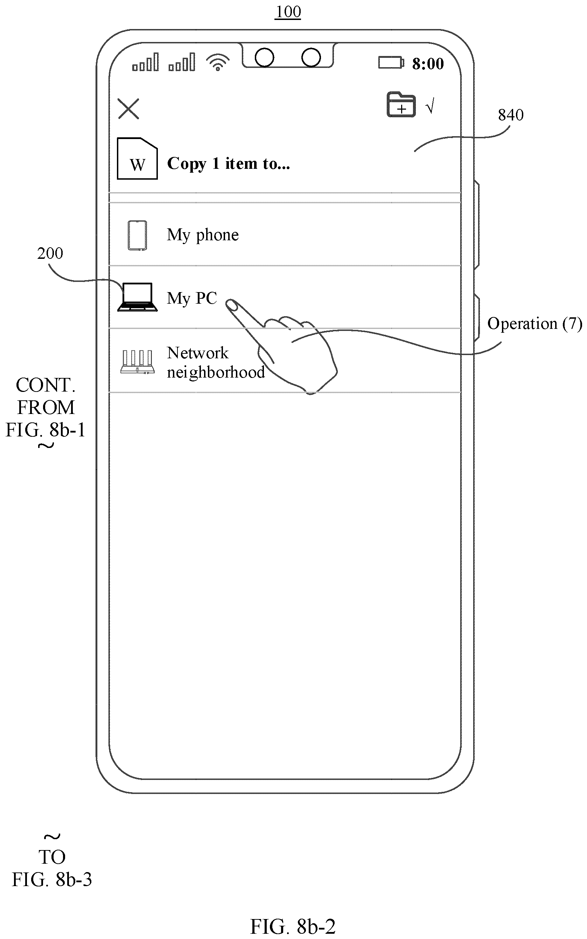

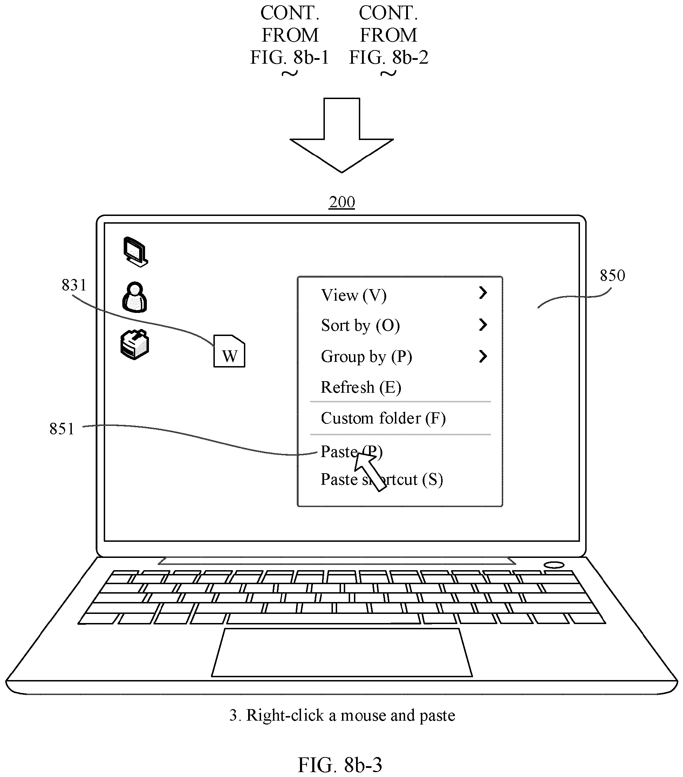

As shown in FIG. 8b-1 to FIG. 8b-3, the user may select, on a document management interface 830 displayed on the mobile phone 100, a word document 831 that needs to be shared. Then, the user may click a copy button 832 on the interface 830, that is, perform an operation (6) shown in FIG. 8b-1, to complete a process of "1. Select a file, and copy" shown in FIG. 8b-1.

Still refer to FIG. 8b-1 to FIG. 8b-3. After the user operates to complete copying, the mobile phone 100 may display a selection interface 840. The interface 840 may be used to select a target device to which the word document 831 is copied. The user may further select a target device on the selection interface 840, for example, select the computer 200, that is, perform an operation (7) shown in FIG. 8b-2. In this way, the word document 831 may be specified to be copied to a clipboard of the computer 200. Then, still refer to FIG. 8b-1 to FIG. 8b-3. The user may paste, on a desktop 850 of the computer 200, the copied word document 831 on the desktop 850 by right-clicking a mouse and selecting a "paste" option 851.

It may be understood that, in this scenario, when operating to copy the image on the mobile phone 100, the user specifies the target device, for example, the foregoing computer 200. Therefore, the word document may be specified to be pasted locally by the computer 200. Specifically, the computer 200 also obtains, based on authorization information and a URI of a distributed file to which the word document is correspondingly mapped, the word document for pasting. A specific sharing process is described in detail below with reference to the accompanying drawings. Details are not described herein.

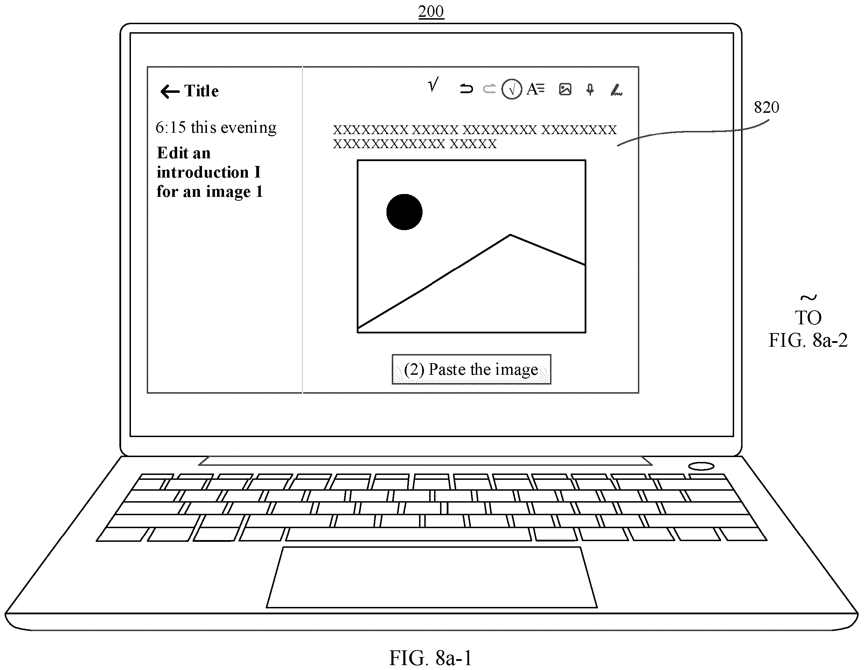

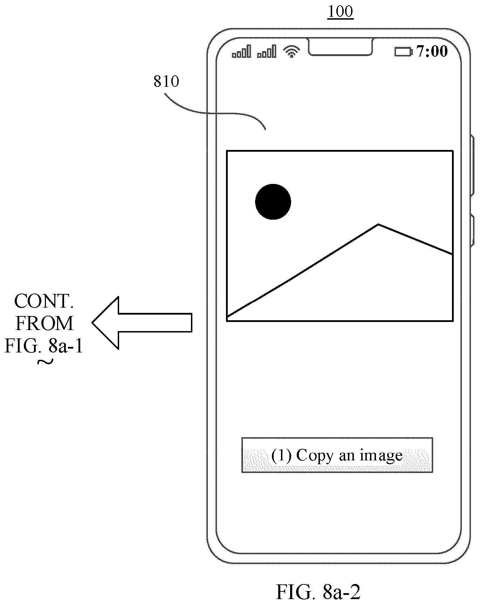

Based on the sharing scenarios shown in FIG. 8a-1 to FIG. 8b-3, the following describes in detail, with reference to flowcharts, a specific implementation process of the file sharing method provided in this embodiment of this application in a sharing scenario of copying a target file across devices.

FIG. 9 is a flowchart of another file sharing method according to an embodiment this application.

As shown in FIG. 9, an execution body of each step in the procedure may be a local device that provides a target file, for example, the mobile phone 100 in the foregoing scenarios shown in FIG. 8a-1 to FIG. 8b-3. Therefore, to simplify description, when content performed in each step is described below, an execution body of each step is not repeatedly described.

Specifically, the procedure includes the following steps.

901: Detect a user operation of copying a target file. A target device may be or may not be specified for the user operation.

For example, for an operation of the user for copying the target file on the mobile phone 100, refer to corresponding operations in the scenarios shown in FIG. 8a-1 to FIG. 8b-3. Refer to FIG. 7. When operating to copy the image on the image browsing interface 710 of the mobile phone 100, the user may not specify a device to which the image is copied, that is, does not specify a target device. In this case, the mobile phone 100 may record related information that no target device is specified for the copy operation, for example, may add a corresponding mark. Refer to the scenario shown in FIG. 8b-1 to FIG. 8b-3. When operating to copy the word document on the document management interface 810 of the mobile phone 100, the user may specify a specific device to which the word document is copied, that is, specify a target device. In this case, the mobile phone 100 may record related information of the target device specified for the copy operation. This is not limited herein.

902: Create a distributed file in a distributed file system based on the target file.

An execution process of step 902 is the same as that of step 502 in Embodiment 1. For details, refer to related descriptions in step 502. Details are not described herein.

903: Set authorization information and a security management and control policy for the target device in the created distributed file based on whether a target device is specified for the detected user operation of copying the target file.

For example, if no target device is specified for the user operation, the mobile phone 100 may set, in the distributed file, authorization information for all currently connected devices. The all devices may include, for example, the computer 200 and another electronic device in the scenario shown in FIG. 8a-1 and FIG. 8a-2. In this case, the security management and control policy that corresponds to the mobile phone 100 and that is set in the distributed file may be a policy used to manage and control whether authorization information corresponding to all currently connected devices is invalid.

If a target device is specified for the user operation, the mobile phone 100 may set, in the distributed file, the authorization information for the target device specified for the user operation. The target device may be, for example, the computer 200 in the scenario shown in FIG. 8b-1 to FIG. 8b-3. In this case, the security management and control policy that corresponds to the mobile phone 100 and that is set in the distributed file may be a policy used to manage and control whether the authorization information corresponding to the target device is invalid.

For a specific process of setting the authorization information and the corresponding security management and control policy, refer to related descriptions in step 503 in Embodiment 1. Details are not described herein.

904: Establish a mapping relationship between the locally stored target file and the distributed file.

It may be understood that, in this case, the mobile phone 100 may complete a creation process of the distributed file that is correspondingly mapped to the to-be-copied target file specified by the user.

FIG. 10 is a diagram of a distributed file creation process completed on the mobile phone 100 according to an embodiment of this application.

Refer to a left figure in FIG. 10. A word document "1.docx" in a "docx" format is used as an example. In response to a copy operation of a user, the mobile phone 100 may create a distributed file "1.docx" in a subdirectory "Shared" of a distributed file system directory "distributed file" based on "1.docx" in a local file system directory "files". In addition, the mobile phone 100 may complete mapping between "1.docx" under "files" and "1.docx" under "Shared" in the distributed file system. To be specific, the mobile phone 100 performs the foregoing steps 902 to 904, to create the distributed file and complete a process of mapping between the distributed file and the target file. Refer to a right figure shown in FIG. 10. The mobile phone 100 may generate, based on the created distributed file "1.docx" in the subdirectory "Shared" of the distributed file system directory "distributed file", a URI corresponding to the distributed file for sharing.

905: Generate the uniform resource identifier URI corresponding to the distributed file.

An execution process of step 905 is the same as that of step 505 in Embodiment 1. For details, refer to related descriptions in step 505. Details are not described herein.

906: Share the generated URI of the distributed file based on whether a target device is specified for the detected user operation of copying the target file.

For example, if no target device is specified for the user operation, the mobile phone 100 may send the generated URI of the distributed file to all currently connected devices. The all devices may include, for example, the computer 200 and another electronic device in the scenario shown in FIG. 8a-1 and FIG. 8a-2. If the user operation specifies the target device, the mobile phone 100 may send the generated URI of the distributed file to the target device specified for the user operation. Refer to the scenario shown in FIG. 8b-1 to FIG. 8b-3. For example, the mobile phone 100 may send the generated URI of the distributed file to the computer 200 specified for the user operation.

The mobile phone 100 may share, based on a distributed sharing service in a system, the URI of the distributed file with the currently connected device or the target device specified by the user. For a specific sharing process, refer to related descriptions in step 506 in the foregoing Embodiment 1. Details are not described herein.

907: Receive an obtaining request for the distributed file.

For example, after the mobile phone 100 shares the URI of the distributed file with all currently connected devices or the target device specified for the user operation, the user may perform a paste operation on the target device. In this case, the target device may request, based on the received URI of the distributed file, to obtain the corresponding distributed file and store the corresponding distributed file into local storage space of the target device. Refer to the foregoing creation process shown in FIG. 10. The distributed file "1.docx" created based on "1.docx" in the local file system directory "files" of the mobile phone 100 may be obtained and stored by the target device, for example, the computer 200, into the local storage space of the computer 200, to implement a process of pasting the distributed file "1.docx" to a desktop or another folder specified by the user. This is not limited herein.

908: Determine, based on the authorization information and the security management and control policy, whether the device currently requesting to operate the distributed file has obtaining permission. If a determining result is yes, it indicates that the target device has the obtaining permission, and the following step 909 may be performed to respond to the obtaining request of the target device for the distributed file. If the determining result is no, it indicates that the target device does not have the obtaining permission, and the following step 910 is performed to reject the obtaining request of the target device for the distributed file.

For example, the mobile phone 100 may verify, based on the authorization information set in the distributed file, whether the device currently requesting to open the distributed file has matched authorization information.

It may be understood that, in the scenario in which no target device is specified shown in FIG. 8a-1 and FIG. 8a-2, if some electronic devices do not detect, within preset invalidation time corresponding to the security management and control policy, the user operation of pasting the target file, the mobile phone 100 may delete, based on the security management and control policy, authorization information corresponding to these electronic devices. After the authorization information is deleted, in this sharing process, these electronic devices cannot obtain the corresponding distributed file based on the URI of the distributed file to implement a pasting process. Similarly, in the scenario in which a target device is specified shown in FIG. 8b-1 to FIG. 8b-3, if the paste operation of the user is not detected on the target device for long time, the authorization information corresponding to the target device is also invalid.

For a specific process of determining, based on the security management and control policy and the authorization information, whether the target device has the permission to obtain the distributed file, refer to related descriptions in step 508 in Embodiment 1. Details are not described herein.

909: Provide the corresponding distributed file in response to the received obtaining request.

For example, in response to the paste operation performed by the user, the target device may access the distributed file system of the mobile phone 100 based on the received URI of the distributed file, and request to obtain the corresponding distributed file and store the corresponding distributed file into the local storage space of the target device, to complete the pasting process. Correspondingly, based on the obtaining request of the target device, the mobile phone 100 may paste, by using a sharing capability of the distributed file system, the distributed file into a distributed file system corresponding to the target device. In some other embodiments, a process in which the mobile phone 100 provides the corresponding distributed file in response to the obtaining request for obtaining the distributed file by the target device may also be another process. This is not limited herein.

It may be understood that the distributed file requested to be obtained by the target file may be equivalent to the target file, and content of the target file is also correspondingly shared with the target device in the foregoing pasting process.

910: Reject the obtaining request of the target device for the distributed file.

For example, if the mobile phone 100 verifies that the target device currently requesting to obtain the distributed file does not have the obtaining permission, the mobile phone 100 may reject the obtaining request of the target device for the distributed file. In this case, a corresponding prompt message may be displayed on a display interface of the mobile phone 100 serving as the local device or a display interface of the target device.

Based on the foregoing sharing scenario shown in FIG. 8b-1 to FIG. 8b-3, FIG. 11 is a diagram of a prompt interface correspondingly displayed when an obtaining request of a target device is rejected according to an embodiment of this application.

When the obtaining request of the target device for the corresponding distributed file is rejected, it indicates that when performing step 908, the mobile phone 100 determines that the target device currently obtaining the distributed file has no permission, or historical authorization information is invalid, that is, the target device loses operation permission. In this case, as shown in FIG. 11, when the user right-clicks on a desktop 1101 of the computer 200 serving as the target device, and an operation window 1102 pops up, a "Paste" option 1103 in the operation window 1102 may be displayed in an unselectable state, for example, displayed in light gray, indicating that the paste operation cannot be performed at this time. Still refer to FIG. 11. A corresponding "Paste shortcut" option in the operation window 1102 may also be displayed in the unselectable state.

In some other embodiments, when the target device loses permission or has no permission to operate the distributed file, an interface of the target device may alternatively display a prompt interface of another style different from that shown in FIG. 11, or the mobile phone 100 serving as the local device may display a corresponding prompt interface. This is not limited herein.

It may be understood that, after the target device loses the operation permission, if the user needs to copy the target file or content of the target file on the local device again and paste the target file or the content of the target file on the target device, the user may perform the copy operation again on the mobile phone 100, and complete the paste operation within preset secure and validity duration. In other words, the mobile phone 100 performs a specific implementation process of cross-device file copying shown in the foregoing steps 901 to 910.

It may be understood with reference to an implementation process of the steps in the flowchart shown in FIG. 9 that, in the sharing process of copying the target file across devices, the electronic device like the mobile phone 100 may create, when detecting the copy operation of the user, the distributed file to which the target device is mapped, and determine, based on whether the user selects the target device to which the distributed file is to be pasted when performing the copy operation, whether to share the URI corresponding to the distributed file with all connected electronic devices such as the computer 200 or share the URI of the distributed file with only the target device (for example, the computer 200) specified by the user. In addition, based on the foregoing file sharing solution provided in this embodiment of this application, the mobile phone 100 may perform, based on the authorization information and the security management and control policy that are preset in the distributed file and that correspond to each connected electronic device or the target device specified by the user for pasting, security management and control on the obtaining permission of the target device for obtaining the distributed file and storing the distributed file into the local storage space, to effectively improve security of the target file correspondingly mapped to the distributed file in the sharing process.

After specific implementation processes of the file sharing methods provided in Embodiment 1 and Embodiment 2 are described, the following describes, by using an example and with reference to the accompanying drawings, a structure that the mobile phone 100 serving as the local device may have.

FIG. 12 is a diagram of a hardware structure of the mobile phone 100 according to an embodiment of this application.

The mobile phone 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, and the like.

It may be understood that the structure shown in this embodiment of the present invention does not constitute a specific limitation on the mobile phone 100. In some other embodiments of this application, the mobile phone 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction fetching and instruction execution. In this embodiment provided in this application, the processor 110 of the mobile phone 100 may control, by using the controller, execution of instructions corresponding to content executed in each step in the procedures shown in FIG. 5 and/or FIG. 9, to implement the file sharing method provided in some embodiments of this application.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The UART interface is a universal serial data bus, and is configured to perform asynchronous communication. The bus may be a bidirectional communication bus. The bus converts to-be-transmitted data between serial communication and parallel communication. In some embodiments, the UART interface is generally used to connect the processor 110 and the wireless communication module 160. For example, the processor 110 communicates with a Bluetooth module in the wireless communication module 160 through the UART interface, to implement a Bluetooth function.

The USB interface 130 is an interface that conforms to a USB standard specification, and may be specifically a mini USB interface, a micro USB interface, a USB type-C interface, or the like. The USB interface 130 may be configured to be connected to a charger to charge the mobile phone 100, or may be configured to transmit data between the mobile phone 100 and a peripheral device, or may be configured to connect to a headset, to play audio by using the headset. The interface may be further configured to connect to another electronic device like an AR device.

It may be understood that an interface connection relationship between the modules that is shown in this embodiment of the present invention is merely an example for description, and does not constitute a limitation on a structure of the mobile phone 100. In some other embodiments of this application, the mobile phone 100 may alternatively use an interface connection manner different from that in the foregoing embodiment, or use a combination of a plurality of interface connection manners.

The charging management module 140 is configured to receive a charging input from a charger. The power management module 141 is configured to connect the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like.

A wireless communication function of the mobile phone 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the mobile phone 100 may be configured to cover one or more communication frequency bands. Different antennas may also be multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the mobile phone 100 and that includes 2G, 3G, 4G, 5G, and the like.

The wireless communication module 160 may provide a solution to wireless communication that is applied to the mobile phone 100 and that includes a wireless local area network (wireless local area network, WLAN) (for example, a wireless fidelity (wireless fidelity, Wi-Fi) network), Bluetooth, a global navigation satellite system (global navigation satellite system, GNSS), frequency modulation (frequency modulation, FM), near field communication (NFC), an infrared (infrared, IR) technology, and the like. The wireless communication module 160 may be one or more devices integrating at least one communication processor module. The wireless communication module 160 receives an electromagnetic wave through the antenna 2, performs frequency modulation and filtering on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2. In this embodiment of this application, the wireless communication solution provided by the wireless communication module 160 may further include a solution of implementing an inter-device communication connection based on a distributed soft bus.

In some embodiments, the antenna 1 and the mobile communication module 150 in the mobile phone 100 are coupled, and the antenna 2 and the wireless communication module 160 in the mobile phone 100 are coupled, so that the mobile phone 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The mobile phone 100 may implement a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The mobile phone 100 may implement a photographing function by using the ISP, the camera 193, the video codec, the GPU, the display 194, the application processor, and the like. The ISP is configured to process data fed back by the camera 193. The camera 193 is configured to capture a static image or a video.

The external memory interface 120 may be configured to connect to an external memory card, for example, a micro SD card, to expand a storage capability of the mobile phone 100. The external memory card communicates with the processor 110 through the external memory interface 120, to implement a data storage function, for example, store files such as music and a video in the external memory card.

The internal memory 121 may be configured to store computer-executable program code, and the computer-executable program code includes instructions. The internal memory 121 may include a program storage area and a data storage area. The program storage area may store an operating system, an application required by at least one function (for example, a voice playing function or an image playing function), and the like. The data storage area may store data (such as audio data and a phone book) and the like created during use of the mobile phone 100. In addition, the internal memory 121 may include a high speed random access memory, and may further include a nonvolatile memory, for example, at least one magnetic disk storage device, a flash storage device, or a universal flash storage (universal flash storage, UFS). The processor 110 runs instructions stored in the internal memory 121 and/or instructions stored in a memory disposed in the processor, to perform various function applications of the mobile phone 100 and data processing.

The mobile phone 100 may implement audio functions such as music playing and recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The mobile phone 100 may be used to listen to music or answer a call in a hands-free mode over the speaker 170A.

The receiver 170B, also referred to as an "earpiece", is configured to convert an audio electrical signal into a sound signal. When a call is answered or speech information is received through the mobile phone 100, the receiver 170B may be put close to a human ear to listen to a voice.

The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the mobile phone 100. In some other embodiments, two microphones 170C may be disposed in the mobile phone 100, to collect a sound signal and implement a noise reduction function. In some other embodiments, three, four, or more microphones 170C may alternatively be disposed in the mobile phone 100, to collect a sound signal, implement noise reduction, and identify a sound source, to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, for example, a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The mobile phone 100 determines pressure intensity based on the change in the capacitance. When a touch operation is performed on the display 194, the mobile phone 100 detects intensity of the touch operation through the pressure sensor 180A. The mobile phone 100 may also calculate a touch location based on a detection signal of the pressure sensor 180A. In some embodiments, touch operations that are performed on a same touch location but have different touch operation intensity may correspond to different operation instructions. For example, when a touch operation whose touch operation intensity is less than a first pressure threshold is performed on a short message application icon, an instruction for viewing a short message is performed. When a touch operation whose touch operation intensity is greater than or equal to the first pressure threshold is performed on the short message application icon, an instruction for creating a new short message is performed.

The gyroscope sensor 180B may be configured to determine a moving posture of the mobile phone 100. In some embodiments, angular velocities of the mobile phone 100 around three axes (that is, x, y, and z axes) may be determined by using the gyroscope sensor 180B. The gyroscope sensor 180B may be configured to implement image stabilization during photographing. For example, when a shutter is pressed, the gyroscope sensor 180B detects an angle at which the mobile phone 100 jitters, obtains, through calculation based on the angle, a distance for which a lens module needs to compensate, and allows the lens to cancel the jitter of the mobile phone 100 through reverse motion, to implement image stabilization. The gyroscope sensor 180B may be further used in a navigation scenario and a motion-sensing game scenario.

The acceleration sensor 180E may detect magnitudes of accelerations of the mobile phone 100 in various directions (generally on three axes). When the mobile phone 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The mobile phone 100 may measure a distance through infrared or laser. In some embodiments, in a photographing scenario, the mobile phone 100 may measure a distance by using the distance sensor 180F, to implement fast focusing.

The fingerprint sensor 180H is configured to collect a fingerprint. The mobile phone 100 may use a feature of the collected fingerprint to implement fingerprint-based unlocking, application lock access, fingerprint-based photographing, fingerprint-based call answering, and the like.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor 180K. The touch sensor may transfer the detected touch operation to the application processor to determine a type of a touch event. A visual output related to the touch operation may be provided through the display 194. In some other embodiments, the touch sensor 180K may also be disposed on a surface of the mobile phone 100 at a location different from that of the display 194.

The button 190 includes a power button, a volume button, and the like. The button 190 may be a mechanical button, or may be a touch button. The mobile phone 100 may receive a button input, and generate a button signal input related to user setting and function control of the mobile phone 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effect. The motor 191 may also correspond to different vibration feedback effect for touch operations performed on different areas of the display 194. Different application scenarios (for example, a time reminder, information receiving, an alarm clock, and a game) may also correspond to different vibration feedback effect. Touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the mobile phone 100.

FIG. 13A and FIG. 13B are a block diagram of a distributed system architecture according to an embodiment of the present invention. The distributed system architecture can be applied to electronic devices such as the mobile phone 100 and the computer 200, and is used to implement the file sharing method provided in embodiments of this application. The following continues to describe, by using the mobile phone 100 and the computer 200 as examples, the distributed system shown in FIG. 13A and FIG. 13B.

As shown in FIG. 13A and FIG. 13B, the distributed system architecture includes an application layer, an application framework layer, a system service layer, and a kernel layer.

The application layer may include a series of application packages. The application package may include applications such as Launcher (Launcher), Settings, and Music, for example, and may further include Calendar, WLAN, Bluetooth, Camera, Gallery, Phone, Maps, and Videos. This is not limited herein.

The application framework layer provides a distributed framework and a light device agent service for the application layer. The distributed framework includes a functional framework used to implement intra-system and inter-system interworking (including startup, invocation, and migration), for example, remote installation, remote startup, migration management, remote invocation, distributed system service management, and FA association management, and an application programming interface (Application Programming Interface, API) corresponding to each framework.

The system service layer is a core of a distributed operating system. The system service layer provides services for applications and SDKs at the application layer through the application framework layer. The system service layer may include a distributed sharing service, a distributed file system, a distributed soft bus, and the like.

The distributed sharing service is used by electronic devices such as the mobile phone 100 and the computer 200 to provide a cross-device sharing capability. For example, the mobile phone 100 may select, based on the distributed sharing service, a remote target device to open a locally shared target file. In addition, the distributed sharing service can map a local target file of the mobile phone 100 to a distributed file by using the distributed file system of the mobile phone 100, and generate a URI of the distributed file. In addition, the distributed sharing service may further correspondingly set authorization information and a security management and control policy for the target device for the distributed file created by mapping the target file in the distributed file system. Further, the distributed sharing service can complete, by sending the URI of the distributed file to the target device, a process of authorizing the target device to read/write the distributed file and sharing the distributed file with the target device.

The distributed file system is used to provide access nodes for different electronic devices to access a same file resource. For example, the mobile phone 100 may access, based on the distributed file system, a file on the computer 200 in a same system, the computer 200 may obtain, based on the distributed file system, a file on the mobile phone 100 in the same system, and the like.

As an example structure of an underlying network, the distributed soft bus is configured to transmit display data between devices and control instructions across devices, that is, to implement Harmony distributed flow (Harmony distributed flow). For understanding of a function of the distributed soft bus, refer to that of a computer hardware bus. For example, the distributed soft bus is an "invisible" bus built between 1+8+N (1 is a mobile phone; 8 indicates a head unit, a sound box, a headset, a watch, a band, a tablet, a large screen, a personal computer (Personal Computer, PC), augmented reality (Augmented Reality, AR), and virtual reality (virtual reality, VR); and N refers to other Internet of Things (IoT) devices) devices, and the bus features automatic discovery, connection-and-use, self-networking (heterogeneous network networking), high bandwidth, low latency, and high reliability. In other words, the distributed soft bus technology is used, so that the devices can not only share all data, but also can be instantly interconnected with any device that is in the same local area network as the device or that is connected to the device through Bluetooth. In addition, the distributed soft bus can further share a file between heterogeneous networks such as Bluetooth and wireless fidelity (wireless fidelity, Wi-Fi) (for example, receiving a file through Bluetooth in one aspect, and transmitting a file through Wi-Fi in the other aspect).

The kernel layer is a layer between hardware and software. A kernel layer of the distributed operating system includes a kernel subsystem and a driver subsystem. The kernel subsystem is located in the distributed operating system and may use a multi-kernel design. Therefore, the kernel subsystem supports selection of a proper OS kernel for different resource-limited devices.

A kernel abstraction layer (kernel abstraction layer, KAL) in the kernel subsystem provides a basic kernel capability for an upper layer by shielding a difference between a plurality of kernels, for example, thread/process management, memory management, a file system, network management, and peripheral management.

A driver framework provided by the driver subsystem is a basis for opening a hardware ecosystem of the distributed system, and provides unified peripheral access capabilities and driver development and management frameworks. The kernel layer includes at least a display driver, a camera driver, an audio driver, and a sensor driver.

The use of "one embodiment" or "an embodiment" in the specification means that particular features, structures, or characteristics described with reference to the embodiment are included in at least one example implementation solution or technology disclosed according to embodiments of this application. The phrase "in one embodiment" appearing in various places in the specification does not necessarily all mean a same embodiment.

The disclosure of embodiments of this application further relates to an apparatus for performing operations in the text. The apparatus may be constructed dedicatedly for the required purpose or may include a general-purpose computer that is selectively activated or reconfigured by a computer program stored in the computer. Such a computer program may be stored on a computer-readable medium, for example, but is not limited to any type of disk, including a floppy disk, a compact disc, a CD-ROM, a magneto-optical disk, a read-only memory (ROM), a random access memory (RAM), an EPROM, an EEPROM, a magnetic or optical card, an application-specific integrated circuit (ASIC), and any type of medium suitable for storing electronic instructions. In addition, each of them may be coupled to a computer system bus. In addition, the computer mentioned in the specification may include a single processor or may be an architecture using a plurality of processors for increased computing capabilities.

In addition, the language used in the specification is already mainly selected for readability and instructional purposes and may not be selected to depict or limit the disclosed topics. Therefore, embodiments of this application are intended to describe but not to limit the scope of the concepts discussed in the specification.

## Claims

1. A file sharing method, wherein the method comprises:
in response to detecting, by a first electronic device, a first sharing operation of a user for indicating to share a first file with a second electronic device, displaying, by the second electronic device, the first file; and
in response to detecting, by the first electronic device, that the first file meets a first condition for ending sharing, stopping, by the second electronic device, displaying the first file, wherein the first condition comprises that sharing permission information corresponding to the second electronic device fails to be matched, or that matched sharing permission information corresponding to the second electronic device is invalid.

2. The method according to claim 1, wherein that the sharing permission information corresponding to the second electronic device fails to be matched comprises that sharing permission information of the first file for the second electronic device is not set in the first electronic device; and
that the matched sharing permission information corresponding to the second electronic device is invalid comprises that sharing permission information that is set in the first electronic device and that is of the first file for the second electronic device is deleted.

3. The method according to claim 1, wherein the detecting, by the first electronic device, that the first file meets a first condition for ending sharing comprises that:
the first electronic device fails to match first permission information corresponding to the second electronic device based on at least one piece of sharing permission information corresponding to the first file; or
the first electronic device determines, based on a first management and control policy corresponding to the first file, that the first permission information is invalid; and
the method further comprises:
in response to detecting, by the first electronic device, an open operation of the user for opening the first file on the second electronic device, displaying, by the second electronic device, a prompt interface, wherein the prompt interface is used to prompt that the second electronic device does not have access permission for the first file.

4. The method according to claim 3, wherein the first management and control policy comprises:
a timeout invalidation policy, used to invalidate the first permission information when it is detected that the first permission information is unused for longer than preset invalidation duration; and/or
a link disconnection invalidation policy, used to invalidate the first permission information when it is detected that a communication connection between the first electronic device and the second electronic device is disconnected.

5. The method according to claim 4, wherein that the first electronic device determines, based on a first management and control policy corresponding to the first file, that the first permission information is invalid comprises:
detecting, by the first electronic device, that the first permission information is unused for longer than the preset invalidation duration, and deleting the first permission information based on the timeout invalidation policy; or
detecting, by the first electronic device, that the communication connection to the second electronic device is disconnected, and deleting the first permission information based on the link disconnection invalidation policy.

6. The method according to any one of claims 1 to 3, wherein the first electronic device comprises a distributed file system, and
the detecting, by a first electronic device, a first sharing operation of a user for indicating to share a first file with a second electronic device comprises:
in response to the first sharing operation, creating, by the first electronic device, a first mapping file corresponding to the first file in the distributed file system, wherein a first mapping relationship exists between the first file and the first mapping file;
setting, by the first electronic device, the first permission information and the first management and control policy in the created first mapping file; and
sending, by the first electronic device, a first sharing request to the second electronic device, wherein the first sharing request comprises a global identifier of the first mapping file, and the global identifier is a unique identifier of the first mapping file in the first electronic device.

7. The method according to claim 6, wherein the global identifier comprises a uniform resource identifier URI of the first mapping file, and the displaying, by the second electronic device, the first file comprises:
in response to the first sharing request, opening, by the second electronic device, the first file based on the URI of the first mapping file and the first mapping relationship; or
in response to the first sharing request, obtaining, by the second electronic device, the first file based on the URI in the first sharing request and the first mapping relationship.

8. The method according to claim 7, wherein the first sharing request further comprises a first application identifier of a first application, and the first application is an application installed on the second electronic device; and
the displaying, by the second electronic device, the first file comprises:
in response to the first sharing request, opening, by the second electronic device, the first file by using the first application based on the URI in the first sharing request, the first application identifier, and the first mapping relationship; or
in response to the first sharing request, obtaining, by the second electronic device based on the URI in the first sharing request, the first application identifier, and the first mapping relationship, the first file, and storing the first file into memory space corresponding to the first application.

9. The method according to any one of claims 6 to 8, wherein the first file and the first mapping file each comprise a file structure, a dentry structure, and an inode structure, and the first mapping relationship comprises:
the file structure of the first file is correspondingly mapped to the file structure of the first mapping file;
the dentry structure of the first file is correspondingly mapped to the dentry structure of the first mapping file; and
the inode structure of the first file is correspondingly mapped to the inode structure of the first mapping file.

10. The method according to claim 9, wherein the setting, by the first electronic device, the first permission information and the first management and control policy in the created first mapping file comprises:
setting the first permission information and the first management and control policy in the dentry structure of the first mapping file.

11. The method according to any one of claims 1 to 10, wherein the first sharing operation comprises:
an open operation on the first file; or
a copy operation on the first file.

12. The method according to claim 3, wherein the prompt interface displays prompt information to prompt that the second electronic device does not have the access permission for the first file; and
the prompt information comprises content prompting that the first file does not exist.

13. A file sharing method, applied to a first electronic device, wherein the method comprises:
detecting a first sharing operation of a user for indicating to share a first file with a second electronic device, and sending a first sharing request to the second electronic device, wherein the first sharing request indicates the second electronic device to display the first file; and
detecting that the first file meets a first condition for ending sharing, and sending a sharing ending notification to the second electronic device, wherein the first condition comprises that sharing permission information corresponding to the second electronic device fails to be matched, or that matched sharing permission information corresponding to the second electronic device is invalid.

14. The method according to claim 13, wherein the detecting that the first file meets a first condition for ending sharing comprises:
failing to match first permission information corresponding to the second electronic device based on at least one piece of sharing permission information corresponding to the first file; or
determining, based on a first management and control policy corresponding to the first file, that the first permission information is invalid; and
the method further comprises:
detecting an open operation of the user for opening the first file on the second electronic device, and sending a prompt message to the second electronic device, wherein the prompt message indicates the second electronic device to display a prompt interface, and the prompt interface is used to prompt that the second electronic device does not have access permission for the first file.

15. The method according to claim 14, wherein the first management and control policy comprises:
a timeout invalidation policy, used to invalidate the first permission information when it is detected that the first permission information is unused for longer than preset invalidation duration; and/or
a link disconnection invalidation policy, used to invalidate the first permission information when it is detected that a communication connection between the first electronic device and the second electronic device is disconnected.

16. The method according to claim 14, wherein the first electronic device comprises a distributed file system, and
the detecting a first sharing operation of a user for indicating to share a first file with a second electronic device comprises:
in response to the first sharing operation, creating a first mapping file corresponding to the first file in the distributed file system, wherein a first mapping relationship exists between the first file and the first mapping file;
setting the first permission information and the first management and control policy in the created first mapping file; and
sending a first sharing request to the second electronic device, wherein the first sharing request comprises a global identifier of the first mapping file, and the global identifier is a unique identifier of the first mapping file in the first electronic device.

17. The method according to claim 16, wherein the first file and the first mapping file each comprise a file structure, a dentry structure, and an inode structure, and the first mapping relationship comprises:
the file structure of the first file is correspondingly mapped to the file structure of the first mapping file;
the dentry structure of the first file is correspondingly mapped to the dentry structure of the first mapping file; and
the inode structure of the first file is correspondingly mapped to the inode structure of the first mapping file.

18. The method according to claim 17, wherein the setting the first permission information and the first management and control policy in the created first mapping file comprises:
setting the first permission information and the first management and control policy in the dentry structure of the first mapping file.

19. A file sharing method, applied to a second electronic device, wherein the method comprises:
in response to a received first sharing request corresponding to a first file, displaying the first file, wherein the first sharing request is a request generated by a first electronic device in response to a first sharing operation of a user, and the first sharing operation is an operation indicating to share the first file with the second electronic device; and
in response to a received sharing ending notification corresponding to the first file, stopping displaying the first file, wherein the sharing ending notification is a notification that is correspondingly generated when the first electronic device detects that the first file meets a first condition for ending sharing, and the first condition comprises that sharing permission information corresponding to the second electronic device fails to be matched, or that matched sharing permission information corresponding to the second electronic device is invalid.

20. The method according to claim 19, wherein in response to the received sharing ending notification corresponding to the first file, the method further comprises:
displaying a prompt interface, wherein the prompt interface is used to prompt that the second electronic device does not have access permission for the first file.

21. The method according to claim 19 or 20, wherein the first sharing request comprises a global identifier of a first mapping file, the first mapping file is a file that is created in a distributed file system by the first electronic device in response to the first sharing operation, a first mapping relationship exists between the first mapping file and the first file, and the global identifier is a unique identifier of the first mapping file in the first electronic device.

22. The method according to claim 21, wherein the global identifier comprises a uniform resource identifier URI of the first mapping file; and
in response to the received first sharing request corresponding to the first file, the displaying the first file comprises:
in response to the first sharing request, opening the first file based on the URI of the first mapping file and the first mapping relationship; or
in response to the first sharing request, obtaining the first file based on the URI in the first sharing request and the first mapping relationship.

23. The method according to claim 22, wherein the first sharing request further comprises a first application identifier of a first application, and the first application is an application installed on the second electronic device; and
in response to the received first sharing request corresponding to the first file, the displaying the first file comprises:
in response to the first sharing request, opening the first file by using the first application based on the URI in the first sharing request, the first application identifier, and the first mapping relationship; or
in response to the first sharing request, obtaining, based on the URI in the first sharing request, the first application identifier, and the first mapping relationship, the first file, and storing the first file into memory space corresponding to the first application.

24. An electronic device, comprising one or more processors and one or more memories, wherein the one or more memories store one or more programs, and when the one or more programs are executed by the one or more processors, the electronic device is enabled to perform the file sharing method according to any one of claims 1 to 23.

25. A computer-readable storage medium, wherein the storage medium stores instructions, and when the instructions are run on a computer, the computer is enabled to perform the file sharing method according to any one of claims 1 to 23.
